# EUROPEAN PATENT SPECIFICATION

(11) **EP 4 257 646 B1**
(45) Date of publication and mention of the grant of the patent: **02.12.2026**
(21) Application number: 21900305.0
(22) Date of filing: 18.10.2021
(51) Int. Cl.: C09D 11/30, C09D 11/106, C09D 11/107, C09D 11/12, C09D 11/322, C09D 11/38

(54) **CHROMATIC PROCESS COLOR INKJET INK**
FARBTINTENSTRAHLTINTE FÜR CHROMATISCHES VERFAHREN
ENCRE POUR JET D'ENCRE DE COULEUR DE PROCÉDÉ CHROMATIQUE

(30) Priority: 04.12.2020 JP 2020201541
(43) Date of publication of application: 11.10.2023
(73) Proprietor: artience Co., Ltd., Tokyo (JP); TOYOCOLOR CO., LTD., Tokyo 104-8381 (JP)
(72) Inventor: YABUKI, Ryosuke, Tokyo 104-8381 (JP); SUGIHARA, Masahiro, Tokyo 104-8381 (JP); HAYAMIZU, Mayuko, Tokyo 104-8381 (JP); MASATOKI, Mutsuko, Tokyo 104-8378 (JP); NOMURA, Takanori, Tokyo 104-8381 (JP); KAMEYAMA, Yuji, Tokyo 104-8381 (JP)
(74) Representative: SSM Sandmair
(86) International application number: PCT/JP2021/038473
(87) International publication number: WO 2022/118549

(56) References cited:
- EP-A1- 3 366 730
- WO-A1-2020/129904
- WO-A1-2020/195360
- WO-A1-2020/213219
- JP-A- 2010 094 864
- JP-A- 2017 088 846
- JP-A- 2020 070 334

## Description

### TECHNICAL FIELD

The present invention relates to a chromatic process color inkjet ink.

### BACKGROUND ART

An inkjet printing method is a method in which very small droplets of ink are discharged from extremely fine nozzles in an inkjet head and made to land on a recording medium to form images and/or text (hereinafter, recording mediums on which images and/or text is recorded are collectively referred to as "printed materials"). Compared to other printing methods, the inkjet printing method is excellent in terms of the size and cost of the printing device, the running cost during printing, the ease of implementing full color, and so forth, and has become remarkably widespread. Furthermore, there has been a notable improvement in the performance of inkjet heads in recent years, and with this the inkjet printing method is expected to expand into the industrial printing market in which the offset printing method has been conventionally used.

In the industrial printing market, in addition to high-permeation recording mediums (liquid-absorbing recording mediums) such as high-quality paper, plain paper, and copy paper, it is necessary to be able to print also on low-permeation recording mediums (low liquid-absorbing recording mediums) such as coated paper and art paper.

However, the ink (inkjet ink) used in the inkjet printing method has extremely low viscosity compared to ink used in the offset printing method, and therefore, for example, when a color image is printed on a low-permeation recording medium, a phenomenon called bleeding occurs in which colors become mixed between different colors (mixed color bleeding), and a phenomenon called beading occurs in which the shades of color look like beads in single colors, resulting in a deterioration in image quality. Furthermore, when printing on a high-permeation recording medium, a phenomenon called feathering occurs in which irregular bleeding of ink occurs along fibers of the recording medium, and a phenomenon called bleed-through also occurs in which the ink permeates to the rear surface of the paper, resulting in a significant decline in image quality as one would expect. Various studies have been conducted so far to solve the above problems (Patent Documents 1 to 4).

Further relevant prior art represents patent document: JP 2020-70334 A.

### PRIOR ART DOCUMENTS

### PATENT DOCUMENTS

Patent Document 1: Japanese Unexamined Patent Application Publication No. 2012-136573
Patent Document 2: Japanese Unexamined Patent Application Publication No. 2009-280671
Patent Document 3: Japanese Unexamined Patent Application Publication No. 2018-203802
Patent Document 4: Japanese Unexamined Patent Application Publication No. 2012-1611

### SUMMARY OF THE INVENTION

### PROBLEMS TO BE SOLVED BY THE INVENTION

Patent Document 1, for example, discloses an ink containing a glycol ether-based poorly water-soluble solvent, an acetylene glycol-based surfactant, and an amino alcohol in order to suppress bleeding and beading. According to Patent Document 1, due to the poorly water-soluble solvent, wettability and permeability with respect to a recording medium having a hydrophobic coating are improved and beading is suppressed. However, the poorly water-soluble solvent has excessively high wettability and permeability with respect to a recording medium, and therefore when printing on a high-permeation recording medium such as high-quality paper, the ink flows and permeates along cellulose fibers making up the recording medium, and there is a problem in that feathering and bleed-through occur in the periphery of printed sections of text and/or thin lines.

Patent Document 2 discloses a method of making ink sensitive to temperature by incorporating a gelling agent, and making the ink have low viscosity when ejected from the inkjet head and high viscosity when having landed on the recording medium by providing a difference between the temperature of the inkjet head and the temperature of the recording medium, to prevent bleeding, beading, feathering, and bleed-through. However, this method requires the inkjet head to be set to a high temperature. For example, in an example of Patent Document 2, the temperature of the inkjet head is set to 70°C, and if the temperature of the inkjet head is not constant, there is a high possibility of the discharge stability deteriorating. Furthermore, because the viscosity of the ink is comparatively high, poor inkjet discharge stability during high-speed printing is a concern. In addition, because the time from the ink landing on the recording medium to the ink solidifying and drying is extremely short, there is a risk that prevention of such phenomena as bleeding, beading, feathering, and bleed-through may be insufficient during high-speed printing. Moreover, the ink described in Patent Document 2 also has a problem in that the rub fastness of the printed material with respect to a low-permeation recording medium is poor.

Note that in Patent Document 3, the applicant previously proposed an ink that uses a fixing resin having a specific structure and acid value to suppress bleeding (mixed color bleeding). In this ink, the fixing resin functions like a surfactant to thereby suppress coalescing of adjacent ink droplets and bleeding. However, when this ink was used, due to the surface activation effect of the fixing resin, there was a risk of the ink becoming excessively permeable with respect to a high-permeation recording medium such as high-quality paper, and that feathering and bleed-through may occur.

As described above, up to now there has not been an inkjet ink that can obtain a printed material without bleeding, beading, feathering, and bleed-through, with excellent rub fastness, and also with excellent discharge stability, in both high-permeation recording mediums and low-permeation recording mediums.

Furthermore, in recent years, there has been a demand to produce printed materials having excellent image quality not only for high-permeation recording mediums and low-permeation recording mediums but also for recording mediums through which ink does not permeate at all (non-permeable recording mediums). Typical examples of non-permeable recording mediums include polyvinyl chloride sheets used in the billboard market, and polyethylene terephthalate (PET) films, polypropylene films, polyethylene films, and the like used in the soft packaging printing market, and it is essential to also support these recording mediums in order to promote the development of inkjet printing methods.

However, even in printing on non-permeable recording mediums, there is a risk that, for example, the aforementioned beading may occur, and that the image quality may deteriorate. Furthermore, depending on the non-permeable recording medium used and the printing conditions, there is a possibility that the wet spreading of applied ink may not be sufficient on a non-permeable recording medium, which may result in a phenomenon where white voids appear in the form of spots or streaks (void hickeys, white streaks), a phenomenon where part of the printed layer adheres to the non-printed surface (rear surface) of the non-permeable recording medium (blocking) when the printed material is rolled up, or the like.

As a method for solving the aforementioned problems, for example, Patent Document 4 discloses an ink that uses two types of water-soluble resins having different weight average molecular weights and acid values. The above-mentioned Patent Document 4 states that by combined use of water-soluble resins having comparatively close weight average molecular weights and acid values, the water-soluble resins in the ink become uniform and the ink viscosity increases due to intermolecular interactions, and it is possible to achieve an improvement in discharge stability and rub fastness while preventing beading (gathering of liquid) on a non-permeable recording medium. However, as mentioned above, the ink described in Patent Document 4 has a high viscosity, and therefore the wet spreading on a non-permeable recording medium is insufficient, and there is a high risk of void hickeys and white streaks occurring. Furthermore, when printing at high speed, there is concern that the discharge stability may deteriorate due to the high viscosity.

Some embodiments of the present invention have been devised in order to solve the aforementioned problems, and an object thereof is to provide a chromatic process color inkjet ink which can obtain a printed material having no image defects such as bleeding, beading, feathering, and bleed-through with respect to various recording mediums, and which also has excellent discharge stability. Furthermore, in addition to the aforementioned, an object of some embodiments of the present invention lies in providing a chromatic process color inkjet ink which has no beading and excellent wet spreadability also when printing on a non-permeable recording medium, and additionally which can obtain a printed material also having favorable blocking resistance.

### MEANS TO SOLVE THE PROBLEMS

As a result of intensive research aimed at resolving the above-mentioned problems, the inventors of the present invention discovered that the above-mentioned problems can be solved by setting the amount of a specific organic solvent and the amount of a binder resin to be within a specific range, and also by combined use of a wax, thus enabling them to complete the present invention.

Specifically, an embodiment of the present invention relates to a chromatic process color inkjet ink containing water, a pigment, an organic solvent, a binder resin, and a wax, in which
the organic solvent contains an organic solvent having a boiling point at 1 atmosphere of 190°C or lower,
the organic solvent having a boiling point at 1 atmosphere of 190°C or lower contains a dihydric alcohol-based solvent and a glycol monoalkyl ether solvent, and
when an amount of an organic solvent having a boiling point at 1 atmosphere of 150°C or higher relative to a total amount of ink is S, and an amount contained of the binder resin relative to the total amount of ink is R, the value of S/R is 3.0 or less.

Furthermore, another embodiment of the present invention relates to the above-mentioned chromatic process color inkjet ink, in which the organic solvent having a boiling point at 1 atmosphere of 190°C or lower contains two or more organic solvents, and among the two or more organic solvents, there is a difference of 10 to 100°C between the boiling point of the organic solvent having the highest boiling point and the boiling point of the organic solvent having the lowest boiling point.

Furthermore, another embodiment of the present invention relates to the above-mentioned chromatic process color inkjet ink, in which the chromatic process color inkjet ink is for a printing device that has an ink circulation mechanism configured to communicate with an inkjet head.

Furthermore, another embodiment of the present invention relates to the above-mentioned chromatic process color inkjet ink, in which the wax contains a polyolefin-based wax having a melting point of 80 to 180°C.

Furthermore, another embodiment of the present invention relates to the above-mentioned chromatic process color inkjet ink, in which the amount of an organic solvent having a boiling point at 1 atmosphere of over 190°C relative to the total amount of ink is 1% by mass or less, and the value of S/R is 2.3 or more and 3.0 or less.

### EFFECTS OF THE INVENTION

According to some embodiments of the present invention, it has become possible to provide a chromatic process color inkjet ink which can obtain a printed material having no image defects such as bleeding, beading, feathering, and bleed-through with respect to various recording mediums, and which also has excellent discharge stability. Furthermore, according to some embodiments of the present invention, in addition to the aforementioned, it has become possible to provide a chromatic process color inkjet ink which has no beading and excellent wet spreadability also when printing on a non-permeable recording medium, and additionally which can obtain a printed material also having favorable blocking resistance.

### EMBODIMENTS FOR CARRYING OUT THE INVENTION

A chromatic process color inkjet ink (hereinafter also referred to simply as "color ink" or "ink") constituting an embodiment of the present invention is described below using a preferred embodiment. Note that herein "aqueous medium" means a medium composed of a liquid containing at least water.

Generally, by lowering the boiling point of an organic solvent contained in an ink, there is an increase in the drying properties of the ink and bleeding on a low-permeation recording medium can be suppressed. For example, by using an organic solvent having a boiling point at 1 atmosphere of 190°C or lower, the ink does not cause poor drying on the recording medium, and bleeding due to coalescing of ink droplets can be suppressed even when printing on a low-permeation recording medium. However, there is a possibility that beading caused by a single-color ink may deteriorate due to the above action. The reason for this is thought to be that a deviation occurs in the drying behavior within the ink droplets due to the drying properties of the ink being excessively high.

Furthermore, by reducing the amount of organic solvent in the ink relative to the amount of binder resin in the ink, the degree of increase in viscosity accompanying the drying of the ink can be increased, and feathering and bleed-through on a high-permeation recording medium can be suppressed. Furthermore, this also leads to a suppression of the coalescing of ink droplets of different colors, and therefore it is thought that a further improvement in bleeding also becomes possible. However, there is a risk that further intensification of the above-mentioned deviation in drying behavior may lead to further deterioration in the beading.

In addition, there is a possibility that both of the aforementioned actions may lead to faster drying and a faster rise in viscosity of ink on the inkjet head, therefore causing deterioration in discharge stability. Therefore, it is difficult to improve beading and discharge stability merely by selecting an organic solvent having a favorable boiling point and adjusting the blend amount of the organic solvent and binder resin.

Thus, as a result of an intensive investigation carried out by the inventors of the present invention, it was discovered that deterioration in beading and discharge stability can be prevented while suppressing bleeding, feathering, and bleed-through by carrying out the aforementioned actions and additionally also using a wax. The reason as to why deterioration in beading and discharge stability can be prevented by adding a wax is not clear but the following is feasible, for example.

Although details will be described hereinafter, the wax and binder resin contained in the ink are different in terms of the type of resin. Therefore, it is thought that the wax and binder resin do not become completely uniform in the ink and that each form microscopic clusters. However, when the ink applied on the recording medium dries, convection occurs inside droplets of the ink. At that time, it is thought that other components in the ink also flow in accordance with the flow of the clusters that become involved in the above-mentioned convection, and as a result, deviation of the components inside the ink droplets is suppressed, the drying behavior becomes uniform, and beading improves.

Furthermore, as mentioned above, in the present invention, the amount of organic solvent relative to the amount of binder resin is small, and the viscosity of the ink during drying is high, and therefore it is easy for a flow to occur throughout the entirety of the inside of the ink during convection. As a result, further suppression of deviation of the components in the ink, uniformity of the drying behavior, and further improvement in beading can be realized. Furthermore, when printing on a non-permeable recording medium, it is thought that the above-mentioned flow throughout the entirety of the inside of the ink promotes the flow of the ink droplets, and wet spreadability thereby improves.

Note that in the case where the gas-liquid interface exists only in a portion of the ink as in the case of ink present in an inkjet head, it is thought that the aforementioned convection instead functions in such a way that localized drying and a rise in viscosity are prevented, and thereby deterioration in discharge stability can be suppressed.

In addition, it is also thought that the above-mentioned clusters prevent pigments from becoming close to each other inside the ink during drying, thereby improving beading even more, and furthermore, the wax clusters inhibit the possible formation of a network among binder resin clusters, thereby suppressing an increase in microscopic viscosity of the ink and improving discharge stability.

Furthermore, when printing on a high-permeation recording medium, the wax fills voids in the high-permeation recording medium, and therefore even more improvement in bleed-through can be realized. In addition, when printing on a non-permeable recording medium, an improvement in blocking resistance due to the wax can also be expected.

For solving all of the problems of the present invention at the same time as described above, the ink composition described above can be said to be indispensable.

Next, each component contained in the chromatic process color inkjet ink constituting an embodiment of the present invention is described below.

### <Organic Solvent>

The ink of an embodiment of the present invention contains an organic solvent having a boiling point at 1 atmosphere of 190°C or lower, and the organic solvent having a boiling point at 1 atmosphere of 190°C or lower contains a dihydric alcohol-based solvent and a glycol monoalkyl ether solvent. In the ink of an embodiment of the present invention, when the amount of an organic solvent having a boiling point at 1 atmosphere of 150°C or higher relative to the total amount of ink is S, and the amount contained of the binder resin relative to the total amount of ink is R, the value of S/R is 3.0 or less. The S/R value is preferably 0.8 or more and 3.0 or less, more preferably 1.0 or more and 2.9 or less, and particularly preferably 1.2 or more and 2.8 or less. If within these ranges, not only can the aforementioned effects be obtained, but also, for example, when a pigment dispersing resin described hereinafter is used, the compatibility of the binder resin and the pigment dispersing resin improves, and thus the discharge stability from the inkjet head also improves.

Note that in one embodiment, the above-mentioned S/R value is preferably 2.3 or more and 3.0 or less, more preferably 2.6 or more and 3.0 or less, and particularly preferably 2.8 or more and 3.0 or less. When the S/R value is within the above ranges, when printing on a non-permeable recording medium, the obtained printed material has no beading, has excellent wet spreadability, and also has good blocking resistance.

Note that "organic solvent" herein refers to an organic compound used to dissolve and/or disperse a substance, and is a liquid under conditions of 25°C and 1 atmosphere.

It is preferable to use a water-soluble organic solvent as the organic solvent. Note that "water-soluble organic solvent" refers to an organic solvent having solubility in water of 5 g/100gH₂O or more under conditions of 25°C and 1 atmosphere. As the water-soluble organic solvent, for example, a monohydric alcohol-based solvent, a dihydric alcohol-based solvent, an alkylene glycol monoalkyl ether-based solvent, an alkylene glycol dialkyl ether-based solvent, or the like can be favorably used.

### <Boiling Point of Organic Solvent>

As mentioned above, the ink of an embodiment of the present invention contains an organic solvent having a boiling point at 1 atmosphere of 190°C or lower. Note that the boiling point at 1 atmosphere can be measured by using a thermal analysis device using DSC (differential scanning calorimetry) or the like.

Examples of the organic solvent having a boiling point at 1 atmosphere of 190°C or lower include, but are not limited to, the following:
as a monohydric alcohol-based solvent, ethanol (boiling point 78°C), 1-propanol (boiling point 97°C), isopropanol (boiling point 82°C), 1-butanol (boiling point 117°C), 2-butanol (boiling point 100°C), isobutanol (boiling point 108°C), 1-pentanol (boiling point 137.8°C), 3-methyl-1-butanol (boiling point 132°C), 3-methyl-2-butanol (boiling point 112°C), 2-methyl-2-butanol (boiling point 102°C), 3-pentanol (boiling point 115.6°C), n-hexanol (boiling point 157°C), 2-methyl-1-pentanol (boiling point 148°C), 2-ethylbutyl alcohol (boiling point 147°C), n-heptanol (boiling point 175.8°C), 2-heptanol (boiling point 160°C), 3-heptanol (boiling point 156°C), 2-octanol (boiling point 179°C), 2-ethylhexanol (boiling point 185°C), cyclohexanol (boiling point 161°C), 2-methylcyclohexanol (boiling point 174°C), glycidol (boiling point 167°C), furfuryl alcohol (boiling point 170°C), tetrahydrofurfuryl alcohol (boiling point 178°C), 3-methoxy-1-butanol (boiling point 158°C), 3-methoxy-3-methyl-1-butanol (boiling point 174°C), 2-(2-methoxymethoxy)ethanol (boiling point 168°C), and the like;
as a dihydric alcohol-based solvent (diol-based solvent), propylene glycol (boiling point 188°C), 2,3-butanediol (boiling point 182°C), and the like;
as an alkylene glycol monoalkyl ether-based solvent, ethylene glycol monomethyl ether (boiling point 124°C), ethylene glycol monoethyl ether (boiling point 135°C), ethylene glycol monobutyl ether (boiling point 171°C), ethylene glycol monoisobutyl ether (boiling point 161°C), ethylene glycol monoisopropyl ether (boiling point 142°C), ethylene glycol monoallyl ether (boiling point 159°C), propylene glycol monomethyl ether (boiling point 121°C), propylene glycol monoethyl ether (boiling point 160°C), propylene glycol monopropyl ether (boiling point 150°C), propylene glycol mono-n-butyl ether (boiling point 170°C), dipropylene glycol monomethyl ether (boiling point 187°C), and the like;
as an alkylene glycol dialkyl ether-based solvent, ethylene glycol dimethyl ether (boiling point 85°C), diethylene glycol dimethyl ether (boiling point 162°C), diethylene glycol methyl ethyl ether (boiling point 176°C), diethylene glycol diethyl ether (boiling point 189°C), diethylene glycol dimethyl ether (boiling point 171°C), and the like;
as an alkylene glycol dialkyl ether acetate-based solvent, ethylene glycol monoethyl ether acetate (boiling point 156°C), propylene glycol monoethyl ether acetate (boiling point 160°C), and the like;
as a chain amide-based solvent, N,N-dimethylformamide (boiling point 153°C), N,N-dimethylpropionamide (boiling point 176°C), and the like;
as a heterocyclic compound-based solvent, piperazine (boiling point 110°C), morpholine (boiling point 129°C), N-methylmorpholine (boiling point 115°C), N-ethylmorpholine (boiling point 138°C), and the like;
as other solvents, ethyl lactate (boiling point 155°C), cyclohexanone (boiling point 156°C), methylcyclohexanone (boiling point 171°C), and the like; and
as an alkanolamine-based solvent, N,N-dimethylaminoethanol (boiling point 134°C), N,N-diethylaminoethanol (boiling point 162°C), N-methylethanolamine (boiling point 156°C), 2-ethylaminoethanol (boiling point 169°C), N-tert-butylethanolamine (boiling point 177°C), diethylisopropanolamine (boiling point 159°C), and the like. Furthermore, these organic solvents may be used singly, or a plurality thereof can also be mixed and used.

From among those listed above, as the organic solvent having a boiling point at 1 atmosphere of 190°C or lower, the ink contains a dihydric alcohol-based solvent (diol-based solvent) and a glycol monoalkyl ether solvent. The ink may contain one or more selected from the group consisting of a monohydric alcohol-based solvent, a glycol dialkyl ether-based solvent, and an alkanolamine-based solvent. From thereamong, it is preferable to include one or more selected from the group consisting of a monohydric alcohol-based solvent and an alkanolamine-based solvent. By containing at least a dihydric alcohol-based solvent (diol-based solvent) and/or a glycol monoalkyl ether solvent, the ink has a favorable permeability and wet spreadability for various recording mediums, and bleeding, beading, feathering, and bleed-through are suppressed. In addition, the solubility of the binder resin improves, and thus the discharge stability improves.

Furthermore, from the viewpoint of the above effect being more favorably expressed, the ink of an embodiment of the present invention preferably contains two or more organic solvents having a boiling point at 1 atmosphere of 190°C or lower. In this case, it is preferable to include two or more organic solvents selected from the group consisting of a monohydric alcohol-based solvent, a dihydric alcohol-based solvent, a glycol monoalkyl ether-based solvent, and an alkanolamine-based solvent. However, the ink contains at least a dihydric alcohol-based solvent (diol-based solvent) and a glycol monoalkyl ether solvent. Furthermore, in particular, it is preferable to include one or more dihydric alcohol-based solvents and one or more glycol monoalkyl ether-based solvents. By containing these organic solvents, bleeding, beading, feathering, and bleed-through can be suppressed regardless of the recording medium, and in addition inkjet discharge stability also improves.

Note that when using two or more organic solvents having a boiling point at 1 atmosphere of 190°C or lower, the difference between the boiling point of the organic solvent having the highest boiling point and the boiling point of the organic solvent having the lowest boiling point out of the organic solvents having a boiling point at 1 atmosphere of 190°C or lower is preferably 10 to 100°C, more preferably 25 to 90°C, and particularly preferably 30 to 70°C. By keeping the difference in boiling points within the above ranges, bleeding, beading, feathering, and bleed-through can be suppressed regardless of the recording medium, and inkjet discharge stability also improves.

However, in the ink of an embodiment of the present invention, the amount contained of the organic solvent having a boiling point at 1 atmosphere of 150°C or higher is three times or less by mass of the amount contained of the binder resin. Note that in calculating the amount contained of the organic solvent having a boiling point at 1 atmosphere of 150°C or higher, the aforementioned organic solvent having a boiling point at 1 atmosphere of 190°C or lower (provided that it has a boiling point of 150°C or higher) is also included in the calculation.

Examples of the organic solvent having a boiling point at 1 atmosphere of 150°C or higher include, but are not limited to, the following:
as a monohydric alcohol, n-hexanol (boiling point 157°C), n-heptanol (boiling point 176°C), 2-heptanol (boiling point 160°C), 3-heptanol (boiling point 156°C), n-octanol (boiling point 195°C), 2-octanol (boiling point 179°C), 2-ethylhexanol (boiling point 185°C), 3,5,5-trimethylhexanol (boiling point 194°C), 1-nonanol (boiling point 214°C), n-decyl alcohol (boiling point 233°C), n-dodecanol (boiling point 257°C), cyclohexanol (boiling point 161°C), 2-methylcyclohexanol (boiling point 174°C), benzyl alcohol (boiling point 205°C), glycidol (boiling point 167°C), furfuryl alcohol (boiling point 170°C), tetrahydrofurfuryl alcohol (boiling point 178°C), α-terpineol (boiling point 221°C), 3-methoxy-1-butanol (boiling point 158°C), 3-methoxy-3-methyl-1-butanol (boiling point 174°C), 2-(2-methoxymethoxy)ethanol (boiling point 168°C), 2-(2-methoxyethoxy)ethanol (boiling point 194°C), 1-butoxyethoxypropanol (boiling point 229°C), and the like;
as a dihydric alcohol, ethylene glycol (boiling point 198°C), propylene glycol (boiling point 188°C), 1,3-propanediol (boiling point 214°C), 1,2-butanediol (boiling point 191°C), 1,3-butanediol (boiling point 207°C), 1,4-butanediol (boiling point 230°C), 2,3-butanediol (boiling point 182°C), 1,2-pentanediol (boiling point 206°C), 1,3-pentanediol (boiling point 209°C), 1,2-hexanediol (boiling point 223°C), 2-methyl-1,3-propanediol (boiling point 214°C), 2,2-dimethyl-1,3-propanediol (boiling point 208°C), 3-methyl-1,3-butanediol (boiling point 203°C), 2-ethyl-2-methyl-1,3-propanediol (boiling point 226°C), 2-ethyl-1,3-hexanediol (boiling point 244°C), diethylene glycol (boiling point 245°C), triethylene glycol (boiling point 287°C), tetraethylene glycol (boiling point 328°C), dipropylene glycol (boiling point 232°C), tripropylene glycol (boiling point 271°C), tetrapropylene glycol (boiling point 271°C), and the like;
as a trihydric or higher alcohol-based solvent (polyol-based solvent), glycerin (boiling point 290°C), 1,2,4-butanetriol (boiling point 312°C), trimethylolpropane (boiling point 295°C), and the like;
as an alkylene glycol monoalkyl ether-based solvent, ethylene glycol monobutyl ether (boiling point 171°C), ethylene glycol monoisobutyl ether (boiling point 161°C), ethylene glycol monohexyl ether (boiling point 208°C), ethylene glycol mono-2-ethylhexyl ether (boiling point 229°C), ethylene glycol monobenzyl ether (boiling point 256°C), ethylene glycol monoallyl ether (boiling point 159°C), diethylene glycol monomethyl ether (boiling point 193°C), diethylene glycol monoethyl ether (boiling point 196°C), diethylene glycol monoisopropyl ether (boiling point 207°C), diethylene glycol monobutyl ether (boiling point 230.6°C), diethylene glycol monoisobutyl ether (boiling point 220°C), diethylene glycol monohexyl ether (boiling point 259°C), diethylene glycol mono-2-ethylhexyl ether (boiling point 272°C), diethylene glycol monobenzyl ether (boiling point 302°C), diethylene glycol monophenyl ether (boiling point 283°C), triethylene glycol monomethyl ether (boiling point 249°C), triethylene glycol monoethyl ether (boiling point 255°C), triethylene glycol monobutyl ether (boiling point 271°C), tetraethylene glycol monobutyl ether (boiling point 304°C), propylene glycol monoethyl ether (boiling point 160°C), propylene glycol mono-n-butyl ether (boiling point 170°C), dipropylene glycol monomethyl ether (boiling point 187°C), dipropylene glycol monopropyl ether (boiling point 231°C), dipropylene glycol mono-n-butyl ether (boiling point 212°C), tripropylene glycol monomethyl ether (boiling point 242°C), and the like;
as an alkylene glycol dialkyl ether-based solvent, diethylene glycol dimethyl ether (boiling point 162°C), diethylene glycol methyl ethyl ether (boiling point 176°C), diethylene glycol diethyl ether (boiling point 189°C), diethylene glycol dibutyl ether (boiling point 255°C), diethylene glycol methyl butyl ether (boiling point 212°C), triethylene glycol dimethyl ether (boiling point 216°C), triethylene glycol methyl butyl ether (boiling point 261°C), tetraethylene glycol dimethyl ether (boiling point 275°C), and the like;
as an alkylene glycol monoalkyl ether acetate-based solvent, ethylene glycol monoethyl ether acetate (boiling point 156°C), diethylene glycol monoethyl ether acetate (boiling point 218°C), propylene glycol monoethyl ether acetate (boiling point 160°C), and the like;
as a nitrogen-containing solvent, N,N-diethylaminoethanol (boiling point 162°C), N,N-dibutylaminoethanol (boiling point 226°C), N-(β-aminoethyl)ethanolamine (boiling point 244°C), N-methylethanolamine (boiling point 156°C), N-methyldiethanolamine (boiling point 245°C), 2-ethylaminoethanol (boiling point 169°C), N-ethyldiethanolamine (boiling point 251°C), mono-n-butylethanolamine (boiling point 199°C), mono-n-butyldiethanolamine (boiling point 270°C), N-tert-butylethanolamine (boiling point 177°C), diethylisopropanolamine (boiling point 159°C), triethanolamine (boiling point 335°C), N-(2-hydroxyethyl)piperazine (boiling point 246°C), 4-(2-hydroxyethyl)morpholine (boiling point 227°C), N,N-dimethylformamide, N,N-dimethyl-β-methoxypropionamide, N,N-dimethyl-β-ethoxypropionamide, N,N-dimethyl-β-butoxypropionamide, N,N-dimethyl-β-pentoxypropionamide, N,N-dimethyl-β-hexoxypropionamide, N,N-dimethyl-β-heptoxypropionamide, N,N-dimethyl-β-2-ethylhexoxypropionamide, N,N-dimethyl-β-octoxypropionamide, N,N-diethyl-β-butoxypropionamide, N,N-diethyl-β-pentoxypropionamide, N,N-diethyl-β-hexoxypropionamide, N,N-diethyl-β-heptoxypropionamide, N,N-diethyl-β-octoxypropionamide, 2-pyrrolidone (boiling point 245°C), N-methylpyrrolidone (boiling point 202°C), N-ethylpyrrolidone (boiling point 218°C) 3-methyl-2-oxazolidinone, 3-ethyl-2-oxazolidinone, and the like; and
as other solvents, ethyl lactate (boiling point 155°C), isophorone (boiling point 215°C), methylcyclohexanone (boiling point 171°C), γ-butyrolactone (boiling point 204°C), ε-caprolactone (boiling point 241°C), and the like. Furthermore, these organic solvents may be used singly, or a plurality thereof can also be mixed and used.

From the viewpoint of obtaining a printed material without bleeding, beading, feathering, and bleed-through for various recording mediums, and of obtaining an ink that does not destabilize the binder resin and surfactant (if used) in the ink, and additionally has low viscosity itself and also excellent discharge stability, the organic solvent having a boiling point at 1 atmosphere of 150°C or higher is preferably selected from the group consisting of a monohydric alcohol-based solvent, a dihydric alcohol-based solvent, and a glycol monoalkyl ether-based solvent, more preferably contains a dihydric alcohol-based solvent and/or a glycol monoalkyl ether-based solvent, even more preferably contains a dihydric alcohol-based solvent or a glycol monoalkyl ether-based solvent, and particularly preferably contains a dihydric alcohol.

Furthermore, from among dihydric alcohol-based solvents, it is preferable to use at least one or more alkanediols having 2 to 6 carbon atoms, it is more preferable to use an alkanediol having 3 to 6 carbon atoms, and it is particularly preferable to use an alkanediol having 5 to 6 carbon atoms. In particular, by containing an alkanediol having 6 carbon atoms, not only are the permeability and wet spreadability for a low-permeation recording medium improved and bleeding and beading suppressed, but when a surfactant is used, compatibility with the surfactant improves and inkjet discharge stability improves.

In addition, in terms of obtaining a printed material in which deviation of the components in the ink is suppressed when the ink dries and in which there is no bleeding and beading when printing on a low-permeation recording medium, with regard to the organic solvent having a boiling point at 1 atmosphere of 150°C or higher, it is preferable that two or more be contained, and it is particularly preferable that one or more selected from dihydric alcohol-based solvents and one or more selected from glycol monoalkyl ether-based solvents be contained.

Meanwhile, the amount contained of an organic solvent having a boiling point at 1 atmosphere of 250 to 300°C in the ink of an embodiment of the present invention is preferably 9% by mass or less (may be 0% by mass), more preferably 5% by mass or less (may be 0% by mass), and particularly preferably 3% by mass or less (may be 0% by mass), relative to the total amount of ink. By limiting the amount of an organic solvent having a boiling point of 250 to 300°C, the ink no longer causes poor drying, and bleeding can be suppressed when printing on a low-permeation recording medium. In addition, when printing on a high-permeation recording medium, feathering and bleed-through are not caused.

Examples of an organic solvent having a boiling point at 1 atmosphere of 250 to 300°C include glycerin (boiling point 290°C), 1,6-hexanediol (boiling point 250°C), triethylene glycol monobutyl ether (boiling point 278°C), triethylene glycol methyl butyl ether (boiling point 261°C), tetraethylene glycol dimethyl ether (boiling point 275°C), triethylene glycol (boiling point 287°C), tripropylene glycol (boiling point 271°C), tetrapropylene glycol (boiling point 250°C or higher), polyethylene glycol 200 (boiling point 250°C or higher), polyethylene glycol 400 (boiling point 250°C or higher), polyethylene glycol 600 (boiling point 250°C or higher), N-methyloxazolidinone (boiling point 257°C), and the like.

Furthermore, from the viewpoint of obtaining a printed material with no beading and also having excellent blocking resistance when printing on a non-permeable recording medium, in one embodiment, the amount contained of an organic solvent having a boiling point at 1 atmosphere of over 190°C is preferably 1% by mass or less (may be 0% by mass), and is particularly preferably 0.5% by mass or less (may be 0% by mass), relative to the total amount of ink.

An organic solvent used in present invention has a weight average boiling point at 1 atmosphere of preferably 100 to 235°C, even more preferably 120 to 210°C, and particularly preferably 120 to 195°C. Furthermore, considering the image quality (suppression of bleeding and beading, and so forth) for low-permeation recording mediums such as coated paper, 120 to 180°C is particularly favorable. If the weight average boiling point at 1 atmosphere of the organic solvent is 100°C or higher, the discharge stability from the inkjet head improves, and the image quality when printing on a high-permeation recording medium improves. Furthermore, if the weight average boiling point is 235°C or lower, poor drying does not occur on the recording medium, residual organic solvent no longer causes bleeding or the like due to the coalescing of ink droplets, the image quality improves, and the rub fastness of a printed material on a low-permeation recording medium typified by coated paper also improves. Note that in calculating the weight average boiling point, it is assumed that the organic solvent having a boiling point at 1 atmosphere of 250 to 300°C is also included. Furthermore, when there are two or more organic solvents contained in the ink, the weight average boiling point at 1 atmosphere is a value obtained by multiplying the boiling point at 1 atmosphere for each organic solvent by the mass ratio of that organic solvent relative to the total amount of organic solvent, and then adding the values calculated for the various organic solvents. In addition, when there is one type of the organic solvent, it is assumed that the above-mentioned "weight average boiling point at 1 atmosphere" is replaced with "boiling point of the organic solvent at 1 atmosphere".

Furthermore, from the viewpoint of ensuring that the weight average boiling point is within the above ranges, the blend amount of an organic solvent having a boiling point at 1 atmosphere of 100 to 225°C is preferably 50% by mass or more, more preferably 70% by mass or more, and particularly preferably 85% by mass or more, relative to the total amount of organic solvent in the ink.

Furthermore, in one embodiment, from the viewpoint of obtaining a printed material without beading when printing on a non-permeable recording medium, the weight average boiling point of water and organic solvent at 1 atmosphere is preferably 100 to 130°C, more preferably 101 to 125°C, and particularly preferably 102 to 120°C. Note that "weight average boiling point of water and organic solvent at 1 atmosphere" refers to water and organic solvent contained in the ink, and is a value calculated using the aforementioned method for calculating the weight average boiling point at 1 atmosphere.

In addition, the specific heat at 20°C of the organic solvent is preferably 0.40 to 0.70 cal/g°C, and more preferably 0.45 to 0.65 cal/g°C. At 0.40 cal/g°C or higher, rapid temperature changes do not occur in the ink drying step, there is less deviation in drying behavior in the ink droplets, and beading and bleeding can be suppressed. At 0.70 cal/g°C or lower, the ink temperature is likely to rise in the ink drying step, ink drying properties are excellent, and feathering and bleed-through improve, and furthermore the compatibility of the wax and binder resin contained in the ink improves, and rub fastness also improves.

The specific heat of the organic solvent can be measured by a DSC (differential scanning calorimeter), for example. Specifically, using a high-sensitivity differential scanning calorimeter Thermo plus EV02 DSC8231 (manufactured by Rigaku Corporation), measurement is performed under the same conditions for a substance obtained by adding approximately 10 g of the organic solvent to be measured to a sample pan made of aluminum and then using a sample sealer to perform sealing, for the sample pan (empty container), and for three substances having a known specific heat, and from the obtained DSC chart the specific heat of the organic solvent can be calculated.

The organic solvent used in the present invention has a weight average static surface tension at 25°C of preferably 25 to 40 mN/m, more preferably 26 to 35 mN/m, and particularly preferably 27 to 32 mN/m. When the weight average static surface tension at 25°C is 25 mN/m or higher, the wet spreadability and permeability on a low-permeation recording medium improve, and a printed material with suppressed bleeding and beading is obtained. Furthermore, when the weight average static surface tension at 25°C is 40 mN/m or lower, the permeability of ink with respect to a high-permeation recording medium is controlled, and a printed material with suppressed feathering and bleed-through is obtained.

Furthermore, when there are two or more organic solvents contained in the ink, the weight average static surface tension at 25°C for the organic solvents is a value obtained by multiplying the static surface tension at 25°C for each organic solvent by the mass ratio of that organic solvent relative to the total amount of organic solvent, and then adding the values calculated for the various organic solvents. In addition, when there is one type of the organic solvent, it is assumed that the above-mentioned "weight average static surface tension at 25°C" is replaced with "static surface tension at 25°C of the organic solvent".

Note that the static surface tension under the condition of 25°C is a value measured by the Wilhelmy method, and specifically is a value that can be measured using a platinum plate using a CBVP-Z manufactured by Kyowa Interface Science Co., Ltd.

The total amount contained of organic solvent used in the present invention is preferably 1 to 29% by mass relative to the total amount of ink. Furthermore, 3 to 27% by mass in the total amount of ink is more preferable from the viewpoint of ensuring discharge stability on the inkjet head and obtaining a printed material having excellent adhesion, drying properties, and image quality (suppression of bleeding and beading, and so forth) even on a low-permeation recording medium, and 5 to 25% by mass is particularly preferable from the viewpoint of obtaining a printed material having no beading, excellent wet spreadability, and also good blocking resistance when printing on a non-permeable recording medium.

### <Pigment>

In the chromatic process color inkjet ink of an embodiment of the present invention, a pigment is used as a colorant for exhibiting a chromatic process color from the viewpoint of obtaining a printed material having excellent color development and color reproducibility. Note that "chromatic process color" in the present invention refers to a chromatic color (a color other than an achromatic color, having a combination of brightness, hue, and chroma) from among the four colors used in printing, specifically, the three colors of cyan, magenta, and yellow.

The pigments that can be used in a chromatic process color inkjet ink are not particularly limited, and conventionally known pigments can be used. Both inorganic pigments and organic pigments may be used as the pigments. Furthermore, pigments that are commonly used in printing applications and coating material applications may be used, and suitable pigments can be selected from among such pigments in accordance with the required application in terms of color reproducibility, color development, light resistance, and so forth.

Note that in order to exhibit a chromatic process color, a pigment that exhibits the same color as the chromatic process color only may be used (for example, a cyan pigment only may be used as a pigment of a cyan ink), or from the viewpoint of improving color reproducibility, color development, light resistance, and so forth, a pigment that does not exhibit the same color as the chromatic process color may be used (for example, a green pigment may be used as a pigment of a cyan ink). In addition, two or more pigments may be used in combination.

From among chromatic process color inkjet inks, examples of pigments that can be used for an ink that exhibits a cyan color (cyan ink) include C.I. Pigment Blue 1, 2, 3, 14, 15, 15:1, 15:2, 15:3, 15:4, 15:6, 16, 22, 60, 62, 64, 66, and the like. From thereamong, from the viewpoint of excellent color development and light resistance, it is preferable to include one or more selected from the group consisting of C.I. Pigment Blue 15:3 and 15:4. Furthermore, as mentioned above, for the purpose of improving color reproducibility, a green pigment such as C.I. Pigment Green 7, 36, 43, 58, or the like may be contained in the mixture.

The amount of pigment contained in the cyan ink is preferably 0.1 to 10% by mass, and more preferably 1 to 10% by mass, of the total mass of the cyan ink.

From among chromatic process color inkjet inks, from the viewpoint of excellent color development and light resistance, it is preferable to use a naphthol-based pigment, a quinacridone-based pigment, a diketopyrrolopyrrole-based pigment, or the like as a pigment that can be used for an ink that exhibits a magenta color (magenta ink). Specific examples include:
as a naphthol-based pigment, laked azo pigments such as C.I. Pigment Red 48:1, 48:2, 48:3, 48:4, 49, 49:1, 49:2, 50, 50:1, 50:2, 51, 52, 52:1, 52:2, 53, 53:1, 55, 56, 57, 57:1, 57:2, 58, 58:1, 58:2, 60, 60:1, 62, 63:1, 63:2, 64, 64:1, 65, 66, 67, 68, 69, 70, 99, 115, 117, 151, 193, 200, 201, 243, and 247, β-naphthol pigments such as C.I. Pigment Red 1, 3, 4, 6, 40, 93, and 144, and naphthol AS pigments such as C.I. Pigment Red 2, 5, 7, 8, 9, 10, 11, 12, 13, 14, 15, 16, 17, 18, 19, 20, 21, 22, 23, 31, 32, 95, 112, 114, 119, 136, 146, 147, 148, 150, 162, 164, 170, 171, 175, 176, 183, 184, 185, 187, 188, 208, 210, 238, 242, 245, 253, 256, 258, 261, 266, 268, and 269;
as a quinacridone-based pigment, C.I. Pigment Red 122, 202, 207, 209, C.I. Pigment Violet 19, and the like; and
as a diketopyrrolopyrrole-based pigment, C.I. Pigment Red 254, 255, and the like.

From thereamong, in terms of excellent color reproducibility, a naphthol-based pigment or a quinacridone-based pigment is preferred, and a naphthol AS pigment or a quinacridone pigment can be used more preferably. In addition, it is particularly preferable to include a naphthol AS pigment. In particular, as a naphthol AS pigment, it is preferable to include one or more selected from the group consisting of C.I. Pigment Red 31, 32, 122, 146, 147, 150, 176, 184, 185, 202, 209, 282, and 269, and more preferable to include one or more selected from the group consisting of C.I. Pigment Red 31, 146, 147, 150, 184, 185, and 269.

The amount of pigment contained in the magenta ink is preferably 0.1 to 10% by mass, and more preferably 2 to 10% by mass, of the total mass of the magenta ink.

From among chromatic process color inkjet inks, examples of pigments that can be used for an ink that exhibits a yellow color (yellow ink) include C.I. Pigment Yellow 10, 11, 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185, 213, and the like. From thereamong, from the viewpoint of excellent color development, it is preferable to use one or more selected from the group consisting of C.I. Pigment Yellow 12, 13, 14, 74, 83, 120, 150, 151, 154, 155, 180, and 185.

### <Pigment Dispersing Resin>

Examples of methods of stably dispersing and maintaining an aforementioned pigment within an ink include the following: (1) a method in which at least part of the pigment surface is coated with a pigment dispersing resin; (2) a method in which a water-soluble and/or water-dispersible surfactant is adsorbed on the pigment surface; and (3) a method (self-dispersing pigment) in which a hydrophilic functional group is chemically or physically introduced to the pigment surface, and the pigment is dispersed in the ink without a dispersing resin or surfactant.

For the ink of an embodiment of the present invention, method (1) from among the above, in other words, the method using a pigment dispersing resin, is favorably selected. This is because by selecting and examining the composition and/or molecular weight of a polymerizable monomer forming a resin, the coating ability of the pigment dispersing resin with respect to the pigment and the electric charge of the pigment dispersing resin can be easily adjusted, which makes it possible to provide dispersion stability even for fine pigments, and in addition a printed material can be obtained having excellent discharge stability, color development, and color reproducibility.

The type of the pigment dispersing resin is not particularly limited, and for example, a (meth)acrylic-based resin, a styrene (meth)acrylic-based resin, an (anhydrous) maleic acid-based resin, a styrene (anhydrous) maleic acid-based resin, an olefin (anhydrous) maleic acid-based resin, an olefin-based resin, a urethane-based resin, an ester-based resin (polycondensation polymer of polyvalent carboxylic acid and polyhydric alcohol), and the like can be used; however, the pigment dispersing resin is not limited thereto. From thereamong, in terms of the discharge stability, breadth of material selectivity, ease of synthesis, and so forth, it is preferable to use one or more selected from the group consisting of a (meth)acrylic-based resin, a styrene (meth)acrylic-based resin, a urethane-based resin, an ester-based resin, and an olefin-based resin. Furthermore, from the viewpoint of improving the dispersion stability and discharge stability of the ink, when a binder resin described hereinafter is used, it is favorable to use the same type of resin as the binder resin as the pigment dispersing resin.

Furthermore, in one embodiment, although the details are unclear, from the viewpoint of obtaining a printed material having no feathering and bleed-through when printing on a high-permeation recording medium, it is favorable to use one or more selected from the group consisting of a styrene (anhydrous) maleic acid-based resin and an olefin (anhydrous) maleic acid-based resin as the pigment dispersing resin.

Note that "(meth)acrylic-based resin" herein means acrylic-based resin, methacrylic-based resin, or acrylic-methacrylic-based resin. Here, "acrylic-methacrylic-based resin" is assumed to mean a resin for which an acrylic acid and/or acrylic acid ester, and a methacrylic acid and/or methacrylic acid ester are used as polymerizable monomers. Furthermore, "(anhydrous) maleic acid" means maleic anhydride or maleic acid.

The above pigment dispersing resins can be synthesized by known methods or commercially available products can be used. Furthermore, there are no particular limitations on the structure thereof, and resins having various structures such as random structures, block structures, comb-like structures, and star-like structures, for example, can be used. In addition, a water-soluble resin or a water-insoluble resin may be selected as a pigment dispersing resin. Note that "water-soluble resin" means that a 1% by mass aqueous mixed liquid having a temperature of 25°C of the resin in question is transparent to the naked eye, and "water-insoluble resin" means a resin other than a water-soluble resin.

In the present invention, when a water-soluble resin is used as a pigment dispersing resin, the acid value thereof is preferably greater than 100 mgKOH/g and 450 mgKOH/g or less, more preferably 120 to 400 mgKOH/g, and particularly preferably is 150 to 350 mgKOH/g. By having the acid value be within the above ranges, it is possible to maintain the dispersion stability of the pigment and it becomes possible to discharge from the inkjet head in a stable manner. Furthermore, the solubility in water of pigment dispersing resins can be ensured, and the interaction among pigment dispersing resins becomes favorable, which is preferable also in terms of thereby being able to suppress the viscosity of the pigment dispersion.

Meanwhile, when a water-insoluble resin is used as a pigment dispersing resin, the acid value thereof is preferably 0 to 100 mgKOH/g, more preferably 5 to 90 mgKOH/g, and even more preferably 10 to 80 mgKOH/g. If the acid value is within the above ranges, a printed material having excellent drying properties and rub fastness can be obtained.

Note that the acid value of the resin can be measured by using a known device. The acid values of resins herein are values measured by a potentiometric titration method in accordance with JIS K 2501. An example of a specific measurement method is a method in which the resin is dissolved in a toluene-ethanol mixed solvent, then titration is carried out with a potassium hydroxide solution, and the acid value is calculated from the titer obtained up to the endpoint, using an AT-610 manufactured by Kyoto Electronics Manufacturing Co., Ltd.

In the ink of an embodiment of the present invention, from the viewpoint of improving the adsorption capacity with respect to the pigment and ensuring dispersion stability, it is preferable to introduce an aromatic group into the pigment dispersing resin. Note that examples of an aromatic group include, but are not limited to, a phenyl group, naphthyl group, anthryl group, tolyl group, xylyl group, mesityl group, and anisyl group. From thereamong, a phenyl group, naphthyl group, and tolyl group are preferred in terms of being able to sufficiently ensure dispersion stability.

From the viewpoint of achieving dispersion stability, discharge stability, print quality, and drying properties of a pigment, the amount introduced of a monomer containing an aromatic ring is preferably 5 to 75% by mass, more preferably 5 to 65% by mass, and even more preferably 10 to 50% by mass, relative to the total amount of monomer forming the pigment dispersing resin.

Furthermore, in addition to an aromatic group, it is particularly favorable to introduce an alkyl group of 8 to 36 carbon atoms into the pigment dispersing resin. This is because, by having the number of carbon atoms of the alkyl group be 8 to 36, it is possible to reduce the viscosity of the pigment dispersion, improve the dispersion stability of the pigment, and improve discharge stability. Note that the number of carbon atoms of the alkyl group is more preferably 10 to 30 carbon atoms, and even more preferably 12 to 24 carbon atoms. Furthermore, if the alkyl group is in the range of 8 to 36 carbon atoms, either a linear or branched alkyl group can be used, but a linear alkyl group is preferred. Examples of linear alkyl groups include an octyl group (C8), lauryl group (C12), myristyl group (C14), cetyl group (C16), stearyl group (C18), arachyl group (C20), behenyl group (C22), lignoceryl group (C24), cerotoyl group (C26), montanyl group (C28), melissyl group (C30), dotriacontanyl group (C32), tetratriacontanyl group (C34), hexatriacontanyl group (C36), and the like.

From the viewpoint of achieving both low viscosity of the pigment dispersion and rub fastness of the printed material, the amount introduced of a monomer containing an alkyl chain of 8 to 36 carbon atoms is preferably 5 to 60% by mass, more preferably 10 to 55% by mass, and particularly preferably 15 to 50% by mass, relative to the total amount of monomer forming the pigment dispersing resin.

Note that when a water-soluble resin is used as a pigment dispersing resin, in order to enhance the solubility into the ink, it is preferable that acid groups within the resin be neutralized with a base. Whether the added amount of the base is excessive can be checked by, for example, preparing a 10% by mass aqueous solution of the pigment dispersing resin and measuring the pH of the aqueous solution. From the viewpoint of improving the dispersion stability and discharge stability of the pigment, the pH of the aqueous solution is preferably 7 to 11, and more preferably 7.5 to 10.5.

Examples of a base for neutralizing a pigment dispersing resin include, but are not limited to, organic amine-based solvents such as triethylamine, monoethanolamine, diethanolamine, triethanolamine, N-methyldiethanolamine, dimethylaminoethanol, diethylaminoethanol, and aminomethylpropanol; ammonia water; alkali metal hydroxides such as lithium hydroxide, sodium hydroxide, and potassium hydroxide; and alkali metal carbonates such as lithium carbonate, sodium carbonate, sodium hydrogen carbonate, and potassium carbonate.

When a water-soluble resin is used as a pigment dispersing resin, the weight average molecular weight thereof is preferably in the range of 1,000 to 500,000, more preferably in the range of 5,000 to 40,000, even more preferably in the range of 10,000 to 35,000, and particularly preferably in the range of 15,000 to 30,000. By having the weight average molecular weight be in the above ranges, the pigment is stably dispersed in water, and furthermore it is easy to adjust the viscosity and so forth when used in an ink. If the weight average molecular weight is 1,000 or more, it becomes difficult for the pigment dispersing resin to dissolve with respect a water-soluble organic solvent added to the ink, and therefore the adsorption of the pigment dispersing resin with respect to the pigment intensifies, and the dispersion stability and discharge stability improve. If the weight average molecular weight is 50,000 or less, the viscosity during dispersion is kept low, and the dispersion stability of the ink and the discharge stability from the inkjet head improve, and stable printing become possible over a long period of time.

The weight average molecular weight of the pigment dispersing resin is a polystyrene-equivalent value that can be measured by a method according to JIS K 7252, for example. An example of a specific measurement method is a method of measurement using a HLC-8120GPC manufactured by Tosoh Corporation, fitted with a TSKgel column manufactured by Tosoh Corporation and an RI detector, and using THF as an eluent.

The blend amount of the pigment dispersing resin is preferably 1 to 100% by mass relative to the blend amount of the pigment. By having the ratio of the pigment dispersing resin be within the above range, the viscosity of the pigment dispersion is suppressed, and the dispersion stability and discharge stability of the ink improve. The ratio of the pigment and the pigment dispersing resin is more preferably 2 to 50% by mass, and particularly preferably 4 to 45% by mass.

One type of pigment dispersing resin may be used singly, or a plurality of types may be used in combination.

### <Dispersion Aid>

In the ink of an embodiment of the present invention, from the viewpoint of significantly improving the dispersion stability and discharge stability of a pigment, and also improving the color reproducibility of a printed material by enabling the fine dispersion of the pigment, a dispersion aid may also be used when selecting method (1) or (2) out of the dispersion techniques mentioned above. A dispersion aid is a material that contributes to improving the adsorption ratio of a pigment dispersing resin or a surfactant with respect to a pigment. In the present invention, a conventionally known material can be used as desired as a dispersion aid, and in particular, compounds referred to as colorant derivatives can be favorably used. A colorant derivative is a compound having a substituent introduced into an organic colorant molecule, and examples of the organic colorant include monoazo-based colorants, disazo-based colorants, polyazo-based colorants, anthraquinone-based colorants, isoindolinone-based colorants, isoindoline-based colorants, quinacridone-based colorants, quinophthalone-based colorants, dioxazine-based colorants, diketopyrrolopyrrole-based colorants, threne-based colorants, thioindigo-based colorants, naphthalocyanine-based colorants, phthalocyanine-based colorants, perinone-based colorants, perylene-based colorants, benzimidazolone-based colorants, metal complex-based colorants, and the like. Note that "colorants" mentioned above is a collective term for pigments and dyes.

When a dispersion aid is used in the present invention, the blend amount thereof is preferably 0.1 to 10% by mass, and particularly preferably 0.5 to 5% by mass, relative to the blend amount of a pigment. By having the blend amount be 0.1% by mass or more, the addition ratio with respect to the pigment is a sufficient amount, and the dispersion stability and the discharge stability improve. Furthermore, by having the blend amount be 10% by mass or less, pigment refinement does not progress beyond the necessary level, and therefore dispersion stability is improved and also deterioration in the light resistance of a printed material is prevented.

### <Binder Resin>

In the ink of an embodiment of the present invention, a binder resin is used to prevent bleeding, feathering, and bleed-through and to improve the rub fastness of the printed material.

A "binder resin" herein is a resin that is used to bind a layer of a printed material (printed layer, ink layer) to a recording medium. Note that, as mentioned above, the ink of an embodiment of the present invention may contain a pigment dispersing resin, but when the resin contained in the ink is a water-soluble resin, whether the resin corresponds to a pigment dispersing resin or a binder resin is distinguished by the adsorption ratio with respect to the pigment. In other words, a resin having an adsorption ratio with respect to the pigment of 50% by mass or more relative to the total blend amount is determined as being a pigment dispersing resin, and a resin having an adsorption ratio of less than 50% by mass relative to the total blend amount is determined as being a binder resin.

Note that as an example of a method of measuring the adsorption ratio with respect to the pigment, a centrifugal separation treatment is carried out on an ink diluted with water as necessary (for example, 4 hours at 30,000 rpm) for separation into pigment and supernatant liquid. Then, when the solid fraction contained in the supernatant liquid is measured, if the solid fraction is 50% by mass or more relative to the total amount of resins having the same composition contained in the aqueous ink, the resin is determined as being a binder resin.

Water-soluble resins and (water-dispersible) resin microparticles (a form of water-insoluble resin) are commonly known as forms of binder resins for aqueous inks, and either one may be selected for use in the present invention or both may be used in combination. For example, resin microparticles have a high molecular weight compared to water-soluble resins and can enhance the rub fastness of printed materials, and are also excellent in terms of the image quality of printed materials. Furthermore, when printing on a high-permeation recording medium, voids in the high-permeation recording medium can be effectively filled, and therefore feathering is suppressed. Meanwhile, an ink that uses a water-soluble resin as a binder resin has excellent discharge stability.

The acid value of the binder resin is preferably 1 to 80 mgKOH/g. Furthermore, the acid value is preferably 3 to 65 mgKOH/g, even more preferably 5 to 45 mgKOH/g, and particularly preferably 15 to 35 mgKOH/g, from the viewpoint of obtaining a printed material having excellent image quality by ensuring the dispersion stability of the pigment and by the binder resin moving quickly to the gas-liquid interface, and in addition, when using a high-permeation recording medium, obtaining a printed material having no feathering and bleed-through due to the binder resin moving quickly in such a way as to fill voids in the high-permeation recording medium. Note that the acid value of the binder resin can be measured in the same manner as that mentioned above for the acid value of the pigment dispersing resin.

The glass transition temperature of the binder resin can be selected as follows according to the required characteristics, for example. Specifically, in order to improve discharge stability and the rub fastness of a printed material, to obtain a printed material having no feathering and bleed-through when printing on a high-permeation recording medium, and to obtain an ink also having excellent drying properties and blocking resistance (phenomenon in which a printed layer sticks to another recording medium when recording mediums are stacked after printing), the glass transition temperature is preferably 60 to 140°C, more preferably 70 to 135°C, and particularly preferably 80 to 130°C.

The glass transition temperature is a value measured using a DSC (differential scanning calorimeter), and can be measured as follows in accordance with JIS K7121, for example. A sample of approximately 2 mg of a dried resin is weighed on an aluminum pan, and the aluminum pan is set as a test container in a holder of a DSC measurement device (for example, DSC-60Plus manufactured by Shimadzu Corporation). Measurements are then performed under a temperature increase condition of 5°C/minute, and the temperature at an intersection between a low-temperature baseline and a tangent at an inflection point, read from an obtained DSC chart, is taken as the glass transition temperature herein.

Examples of types of binder resins used in the present invention include (meth)acrylic-based resin, styrene (meth)acrylic-based resin, urethane-based resin, urethane-(meth)acrylic composite-based resin, styrene-butadiene-based resin, vinyl chloride-based resin, styrene (anhydrous) maleic acid-based resin, ester-based resin, and the like. From thereamong, from the viewpoint of obtaining an ink having excellent dispersion stability and discharge stability, for the binder resin it is preferable to use one or more resins selected from the group consisting of (meth)acrylic-based resin, styrene (meth)acrylic-based resin, urethane-based resin, urethane/acrylic composite-based resin, and polyolefin-based resin, and it is more preferable to use one or more selected from (meth)acrylic-based resin and styrene (meth)acrylic-based resin.

The above-mentioned binder resin can be synthesized by a known method, or a commercially available product can also be used. Furthermore, there are no particular limitations on the structure thereof, and resins having various structures such as random structures, block structures, comb-like structures, and star-like structures, for example, can be used.

When a water-soluble resin is used as the binder resin, the weight average molecular weight thereof is preferably 5,000 to 50,000 from the viewpoint of ensuring discharge stability from the inkjet nozzles and obtaining a printed material having excellent rub fastness with respect to various recording mediums, and is more preferably 8,000 to 45,000, and even more preferably 10,000 to 40,000, from the viewpoint of being able to suppress feathering and bleed-through when printing on a high-permeation recording medium. Note that the weight average molecular weight of the binder resin can be measured in the same manner as that mentioned above for the weight average molecular weight of the pigment dispersing resin.

The amount contained of the binder resin with respect to the total amount of ink is preferably 1 to 15% by mass, more preferably 2 to 12% by mass, and even more preferably 4 to 10% by mass in terms of the solid fraction equivalent. By having the amount of the binder resin be within the above ranges, there is no decline in dispersion stability and discharge stability, and it is possible to obtain a printed material having excellent image quality and rub fastness regardless of the recording medium.

### <Wax>

The ink of an embodiment of the present invention contains a wax. Herein "wax" is an organic compound that is solid at a normal temperature (25°C) and becomes liquid when heated, and for example, has a melting point of 40 to 200°C, and melts without decomposing in a temperature environment above this melting point.

The melting point of the wax is preferably 60 to 200°C, more preferably 80 to 180°C, even more preferably 100 to 180°C, and particularly preferably 120 to 160°C from the viewpoint of the abrasiveness of the printed material.

The wax may be a water-soluble material or a water-insoluble material, but it is preferably a water-insoluble material, particularly resin particles (emulsion). Furthermore, examples according to chemical structure include hydrocarbon wax, ester wax (for example, fatty acid ester wax), silicone wax, and polyalkylene glycol wax.

Note that, for example, an acrylic-silicone copolymer emulsion having a glass transition temperature of 50°C or higher is generally highly unlikely to satisfy the above-mentioned melting point condition, and therefore is not applicable as a wax in the present invention.

More specific examples of the waxes that can be used in the present invention include, for example, natural waxes and synthetic waxes. Examples of natural waxes include: petroleum-based waxes such as paraffin wax, microcrystalline wax, and petrolatum; plant-based waxes such as carnauba wax, candelilla wax, and rice wax; animal-based waxes such as lanolin and beeswax; and mineral-based waxes such as montan wax and ceresin. Examples of synthetic waxes include polyolefin-based wax, Fischer-Tropsch wax, acrylic-silicone copolymer, urethane-silicone copolymer, polyethylene glycol, paraffin wax derivative, montan wax derivative, microcrystalline wax derivative, and the like. These waxes can be used singly or two or more types thereof can be used in combination in an aqueous inkjet ink.

From among the above-mentioned examples, in terms of obtaining rub fastness and excellent image quality on various recording mediums, hydrocarbon wax or silicone wax is preferred, and polyolefin-based wax which is a hydrocarbon wax is more preferred. In particular, by including a polyolefin wax, the binder resin and the polyolefin wax each form microscopic clusters, and deviation of the ink components when the ink dries is suppressed, and beading improves. In addition, the clusters function in such a way as to prevent localized drying and a rise in viscosity in the vicinity of the inkjet nozzles, thereby improving discharge stability.

Examples of polyolefin-based wax include polyethylene-based wax and polypropylene-based wax. Polyethylene-based wax is preferable in terms of discharge stability and rub fastness. Note that each of the above can be used singly or two or more types thereof can be used in combination.

Furthermore, the polyolefin-based wax is preferably a soft polyolefin having a molecular weight of less than 10,000.

When the wax is constituted by resin particles, the average particle size thereof is preferably 5 to 300 nm, more preferably 30 to 250 nm, and particularly preferably 40 to 200 nm. If the average particle size of the wax is 5 nm or more, the rub fastness of the printed material improves, and if it is 300 nm or less, not only does the inkjet discharge stability improve but it is also possible to obtain a printed material having excellent image quality regardless of the recording medium. Note that the average particle size of the wax can be measured by the same method as that used for the average secondary particle size of a pigment described hereinafter.

Wax having the form of resin particles can be produced, for example, by mixing a normal-temperature solid wax that has been heated and melted, hot water, and an emulsifier. Furthermore, commercially available waxes can also be used, for example: AQUACER-507, AQUACER-513, AQUACER-515, AQUACER-526, AQUACER-531, AQUACER-533, AQUACER-535, AQUACER-537, AQUACER-539, AQUACER-552, AQUACER-840, AQUACER-1547, and the like manufactured by BYK-Chemie GmbH; Nopcoat PEM-17 and the like manufactured by San Nopco Limited; JONCRYL WAX 4, JONCRYL WAX 26, JONCRYL WAX 28, JONCRYL WAX 120, and the like manufactured by BASF Corporation; HYTEC E series, HYTEC P series, and the like manufactured by TOHO Chemical Industry Co., Ltd.; and CHALINE FE230N, CHALINE FE502, and the like manufactured by Shin-Etsu Chemical Co., Ltd.

In terms of obtaining a printed material that has excellent discharge stability, excellent rub fastness of the printed material, and high density with no beading, the amount contained of the wax is preferably 0.2 to 8% by mass, more preferably 0.3 to 5% by mass, and particularly preferably 0.5 to 4% by mass, of the total amount of ink.

Furthermore, for the same reason as above, when the amount of wax contained in the total weight of the ink is A (% by mass) and the amount contained of the binder resin is B (% by mass), B ÷ A is preferably 0.5 to 20, more preferably 1 to 15, and particularly preferably 5 to 15.

### <Surfactant>

From the viewpoint of obtaining a printed material having excellent discharge stability, no bleeding and beading, and excellent image quality, the ink of an embodiment of the present invention preferably contains one or more surfactants.

There are various kinds of surfactants according to the application, such as acetylenediol-based surfactants, acetylene alcohol-based surfactants, siloxane-based surfactants, acrylic-based surfactants, fluorine-based surfactants, and polyoxyalkylene ether-based surfactants. From thereamong, it is preferable to include one or more nonionic surfactants selected from the group consisting of acetylenediol-based surfactants, siloxane-based surfactants, and polyoxyalkylene ether-based surfactants, it is more preferable to include one or more selected from the group consisting of acetylenediol-based surfactants and siloxane-based surfactants, and it is particularly preferable to include a siloxane-based surfactant.

The surfactants that can be used in the present invention may be water-soluble or water-insoluble. Note that a siloxane-based surfactant, which is solid at normal temperature and melts at for example 40 to 200°C when heated, may be a material that also serves as the aforementioned silicone wax.

It is thought that, in ink droplets after landing on a recording medium, acetylenediol-based surfactants and siloxane-based surfactants quickly orient toward the gas-liquid interface and the recording medium-droplet interface without being affected by pigment present in the droplets. As a result, even on low-permeation recording mediums, the wettability of the ink can be improved and the ink droplets can be quickly smoothed, drying properties can be improved, and in addition it becomes possible to obtain a printed material having excellent image quality with little bleeding and density irregularities among droplets and with little bleeding and beading. Furthermore, when a siloxane-based surfactant is used, the rub fastness of the printed material also improves in addition to the above, and although the details are unclear, when printing on a high-permeation recording medium such as uncoated paper, excessive permeation and diffusion of ink are suppressed, and an excellent printed material having no feathering and bleed-through is obtained. In particular, in the present invention, although the details are unclear, an ink is obtained also having excellent discharge stability in addition to the aforementioned improvements in characteristics, and therefore it is favorable to use an acetylenediol-based surfactant and a siloxane-based surfactant in combination.

Examples of an acetylenediol-based surfactant used in the present invention include, but are not limited to, 2,4,7,9-tetramethyl-5-decyne-4,7-diol, 2,5,8,11-tetramethyl-6-dodecyne-5,8-diol, hexadec-8-yne-7,10-diol, 6,9-dimethyl-tetradec-7-yne-6,9-diol, 7,10-dimethylhexadec-8-yne-7,10-diol, and ethylene oxide and/or propylene oxide adducts thereof.

Examples of siloxane-based surfactants that can be favorably used in the present invention include: 8032 ADDITIVE, FZ-2104, FZ-2120, FZ-2122, FZ-2162, FZ-2164, FZ-2166, FZ-2404, FZ-7001, FZ-7002, FZ-7006, L-7001, L-7002, SF8427, SF8428, SH3748, SH3749, SH3771M, SH3772M, SH3773M, SH3775M, and SH8400 manufactured by Dow Corning Toray Co., Ltd.; BYK-331, BYK-333, BYK-345, BYK-346, BYK-347, BYK-348, BYK-349, BYK-UV3500, BYK-UV3510, BYK-UV3530, and BYK-UV3570 manufactured by BYK-Chemie GmbH; TEGO Wet 240, TEGO Wet 250, TEGO Wet 260, TEGO Wet 270, TEGO Wet 280, TEGO Glide 410, TEGO Glide 432, TEGO Glide 435, TEGO Glide 440, TEGO Glide 450, TEGO Twin 4000, and TEGO Twin 4100 manufactured by Evonik Industries AG; KF-351A, KF-352A, KF-353, KF-354L, KF-355A, KF-615A, KF-640, KF-642, KF-643, KF-644, KF-945, KF-6011, KF-6012, KF-6015, KF-6017, KF-6020, KF-6204, and X-22-4515 manufactured by Shin-Etsu Chemical Co., Ltd.; and the SILFACE SAG series of Nissin Chemical Industry Co., Ltd. In particular, siloxane-based surfactants in which one or more ethylene oxide groups and/or one or more propylene oxide groups are introduced into a side chain and/or both ends of a polydimethylsiloxane chain can be favorably used.

Furthermore, examples of a polyoxyalkylene ether-based surfactant that can be favorably used in the present invention include compounds represented by general formula (1) shown below, for example.

General formula (1): R-O-(EO)m-(PO)n-H

In general formula (1) above, R represents an alkyl group of 8 to 22 carbon atoms, an alkenyl group of 8 to 22 carbon atoms, an alkylcarbonyl group of 8 to 22 carbon atoms, or an alkenylcarbonyl group of 8 to 22 carbon atoms. Note that the above-mentioned R may be a branched structure. Furthermore, EO represents an ethylene oxide group, and PO represents a propylene oxide group. In addition, m indicates the average number of added moles of EO, which is a number from 2 to 50, and n indicates the average number of added moles of PO, which is a number from 0 to 50. Note that if n is not 0, the addition may be block addition or random addition irrespective of the order of addition of (EO)m and (PO)n.

It is preferable that surfactants used in the present invention be present divided into hydrophobic groups and hydrophilic groups in the molecules. Therefore, from among the surfactants exemplified above, those having ethylene oxide groups, which are hydrophilic, are particularly favorable for selection.

However, from the viewpoint of enhancing affinity with the binder resin, obtaining an ink having excellent pigment dispersion stability and discharge stability, and also obtaining a printed material having no bleeding and beading when printing on a low-permeation recording medium and having no feathering and bleed-through when printing on a high-permeation recording medium, it is favorable to use a surfactant having an HLB value of 0 to 5, and it is particularly favorable to include a surfactant in which the HLB value is 0 to 4.

In particular, in addition to dispersion stability and discharge stability, from the viewpoint of obtaining a printed material having excellent image quality with little bleeding and beading on a low-permeation recording medium, obtaining a printed material having no feathering and bleed-through on a high-permeation recording medium such as uncoated paper, and at the same time obtaining a printed material having no beading and excellent wet spreadability on non-permeable recording mediums, it is preferable to use both a surfactant having an HLB value of 0 to 5 (preferably 0 to 4) and a surfactant having an HLB value of 6 to 18 (preferably 7 to 18, more preferably 8 to 16, and particularly preferably 10 to 16). From thereamong, from the viewpoint of the aforementioned effects being particularly expressed, it is extremely preferable to use an acetylenediol-based surfactant in combination with a siloxane-based surfactant as the aforementioned surfactant having an HLB value of 0 to 5 (preferably 0 to 4).

Note that the HLB (hydrophile-lipophile balance) value is one parameter representing the hydrophilicity or hydrophobicity of a material, with a smaller value indicating a higher hydrophobicity, and a larger value indicating a higher hydrophilicity. There are various known methods for calculating the HLB value from the chemical structure and also various known methods for actual measurement; however, in the present invention, when the structure of a compound is clearly known, such as in the case of an acetylenediol-based surfactant and a polyoxyalkylene ether-based surfactant, the HLB value is calculated using Griffin's method. Note that Griffin's method is a method that calculates the HLB value using formula (2) shown below, using the molecular structure and molecular weight of the target material. Formula (2): 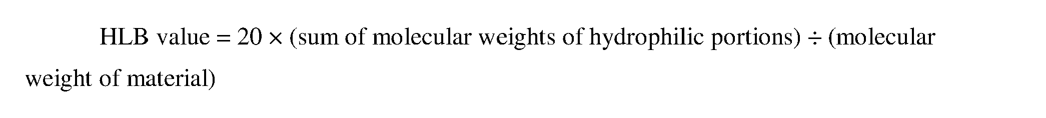 HLB value = 20 × (sum of molecular weights of hydrophilic portions) ÷ (molecular weight of material)

On the other hand, when a compound having an unclear structure such as a siloxane-based surfactant is included, the HLB value of the surfactant can be determined experimentally using, for example, the method below described on page 324 of "The Surfactant Handbook" (edited by Ichiro Nishi et al., Sangyo-Tosho Publishing Co. Ltd., 1960). Specifically, 0.5 g of the surfactant is dissolved in 5 mL of ethanol, and thereafter, with the resulting solution undergoing stirring at a condition of 25°C, titration is performed with a 2% by mass aqueous solution of phenol, with the point where cloudiness of the liquid occurs being deemed the end point. When the amount of the aqueous solution of phenol required to reach the end point is taken as A (mL), the HLB value can be calculated according to formula (3) shown below. Formula (3): $HLB value = 0.89 \times A + 1.11$

The amount contained of surfactant in the present invention is preferably 0.2 to 4% by mass relative to the total amount of ink, and is more preferably 0.5 to 2% by mass.

### <Water>

The water contained in the ink of an embodiment of the present invention is preferably not a typical water containing various ions, and the use of an ion-exchanged water (deionized water) is preferred. Furthermore, the amount contained thereof is preferably in the range of 20 to 90% by mass of the total mass of the ink.

### <Other Components>

Besides the aforementioned components, a pH adjuster can be added to the ink of an embodiment of the present invention as required to obtain an ink having the desired physical property values. In addition to the aforementioned alkanolamine-based solvent, examples of compounds that can be used as a pH adjuster include, but are not limited to, the following:
as other nitrogen-containing compounds, ammonia water, monoethylamine, diethylamine, triethylamine, cyclohexylamine, benzylamine, urea, piperidine, and the like;
as alkali metal hydroxides, lithium hydroxide, sodium hydroxide, potassium hydroxide, and the like;
as carbonates of alkali metals, lithium carbonate, sodium carbonate, sodium bicarbonate, potassium carbonate, and the like; and
as acidic compounds, hydrochloric acid, sulfuric acid, acetic acid, citric acid, maleic acid, maleic anhydride, succinic acid, tartaric acid, malic acid, phosphoric acid, boric acid, fumaric acid, malonic acid, ascorbic acid, glutamic acid, or the like. Note that the above pH adjusters may be used singly, or two or more types thereof may be used in combination. Furthermore, the alkanolamine-based solvent may be a material that serves as both an organic solvent and a pH adjuster.

The blend amount of the pH adjuster is preferably from 0.01 to 5% by mass, more preferably from 0.1 to 3% by mass, and most preferably from 0.2 to 1.5% by mass, relative to the total amount of ink.

Furthermore, in the ink of an embodiment of the present invention, besides the components described above, additives such as anti-foaming agents, preservatives, infrared absorbers, and UV absorbers can be added as appropriate to obtain an ink having the desired physical property values as required. The amount added of these additives is preferably 0.01 to 10% by mass relative to the total mass of the ink. However, the ink of an embodiment of the present invention preferably does not substantially contain a polymerizable monomer.

### <pKa Value of Nitrogen-Containing Compound>

As mentioned above, a nitrogen-containing compound can be used as an organic solvent and/or a pH adjuster in the ink of an embodiment of the present invention. However, depending on the nitrogen-containing compound used, there may be an adverse effect on the pigment dispersion stability and discharge stability, and therefore in the present invention it is preferable that the amount of a nitrogen-containing compound be limited, particularly a nitrogen-containing compound having a molecular weight of 500 or less, which can be particularly susceptible regarding the above-mentioned characteristics.

Note that herein, a nitrogen-containing compound having a molecular weight of 500 or less is generally referred to as a "nitrogen-containing compound". Specific examples of such nitrogen-containing compounds include those having a molecular weight of 500 or less from among the aforementioned alkanolamine-based solvents, nitrogen-containing solvents, and other nitrogen-containing compounds.

Generally in an aqueous ink containing a pigment, due to a charge repulsion that occurs among pigment particles, the dispersed state of the pigment particles is maintained, and dispersion stability is ensured. As a method to maintain dispersion stability over a long period of time, there is a technique of adjusting the pH of the ink to within a range from neutral to weakly basic. By maintaining the pH at neutral to weakly basic, the ion concentration in an electric double layer covering the pigment surface can be increased, an electric double layer repulsive force can be increased, and a large repulsive force can be generated among pigment particles. However, among nitrogen-containing compounds, there are compounds that are acidic and compounds that are strongly basic, and by using these compounds in combination with a pigment, there is a risk that the dispersion stability of the pigment may deteriorate and discharge stability may also deteriorate therewith. Furthermore, when a wax is also used in combination, the compatibility of the binder resin with the ink may deteriorate, and the image quality and rub fastness of the printed material may deteriorate.

As a result of an intensive investigation carried out by the inventors of the present invention, from among the nitrogen-containing compounds, the total blend amount of a nitrogen-containing compound having a pKa value at 25°C of 2 or less (preferably the pKa value is less than 4) or 10 or more (preferably the pKa exceeds 9.5) and having a molecular weight of 500 or less is preferably 3% by mass or less, and more preferably 1% by mass or less, relative to the total amount of aqueous inkjet ink. This is because these compounds are acidic or strongly basic, and if blended in large amounts, as mentioned above, there is a risk that there may be an adverse effect on dispersion stability, discharge stability, and the rub fastness and image quality of the printed material.

However, when a nitrogen-containing compound is used, it is preferable to use a basic organic compound having a pKa value at 25°C of 4 to 9.5. Although the detailed causes are unclear, it is thought that the acid dissociation constant (pKa value) being suitably low and the nitrogen-containing compound being an organic compound suppresses damage to the pigment and the binder resin (a-1).

Specific examples of a nitrogen-containing compound having a pKa value at 25°C of 4 to 9.5 include diethanolamine (pKa = 8.9), methyldiethanolamine (pKa = 8.5), triethanolamine (pKa = 7.8), 1-amino-2-propanol (pKa = 9.4), diisopropanolamine (pKa = 9.0), triisopropanolamine (pKa = 8.0), trishydroxymethylaminomethane (pKa = 8.1), imidazole (pKa = 7.0), and aniline (pKa = 4.6). From thereamong, in terms of high solubility in an aqueous medium, safety with respect to the human body, and so forth, it is preferable to use an alkanolamine, and it is especially preferable to include triethanolamine which has a low pKa value. Note that one type of the above compounds may be used singly, or two or more types thereof may be used in combination.

When using a nitrogen-containing compound having a pKa value of 4 to 9.5, the amount contained thereof is preferably 1.25% by mass or less relative to the total amount of ink, and even more preferably 0.1 to 1.0% by mass. If within the above ranges, deterioration in the rub fastness and image quality of the printed material can be prevented without causing deterioration in dispersion stability and discharge stability.

Note that from the viewpoint of comprehensively achieving dispersion stability, discharge stability, rub fastness, and image quality for the ink, regardless of the pKa value, it is preferable that the total blend amount of a nitrogen-containing compound be 3% by mass or less, and even more preferably 1.25% by mass or less, relative to the total amount of aqueous inkjet ink.

Note that in an embodiment of the present invention, the pKa value can be measured by a known method, for example, a potentiometric titration method. Furthermore, urea (pKa value = 0.2) can be given as an example of a nitrogen-containing compound having a pKa value at 25°C of 2 or less. Furthermore, examples of a nitrogen-containing compound having a pKa value at 25°C of 10 or more include cyclohexylamine (pKa value = 10.6), monoethylamine (pKa value = 10.7), diethylamine (pKa value = 11.0), triethylamine (pKa value = 10.7), and piperidine (pKa value = 11.2).

### <Ink Production Method>

The ink of an embodiment of the present invention containing the aforementioned components can be produced by a known method. In particular, in terms of obtaining an ink having excellent dispersion stability and discharge stability, the following manufacturing method is favorably selected: a pigment dispersion containing a pigment is produced in advance, and then the pigment dispersion, an organic solvent, a binder resin, a wax, a surfactant as required, and so forth are mixed. Examples of methods for producing the ink of an embodiment of the present invention are described below, but as mentioned above, the production method is not limited to those described below.

### (1) Production of Pigment Dispersion

### (1-1) Method of Performing Dispersion Treatment Using Pigment Dispersing Resin That Is Water-Soluble Resin

When a water-soluble resin is used as a pigment dispersing resin, the pigment dispersing resin and water, and an organic solvent as necessary, are mixed and stirred to produce an aqueous solution of pigment dispersing resin. A pigment and as necessary a dispersion aid, additional water, and an additional organic solvent are added to the aqueous solution of pigment dispersing resin, the resulting mixture is mixed and stirred (premixing), and then a dispersion treatment is performed using a dispersion device. Thereafter, centrifugal separation, filtration, and solid fraction adjustment are carried out as necessary to obtain a pigment dispersion.

### (1-2) Method of Performing Dispersion Treatment Using Pigment Dispersing Resin That Is Water-Insoluble Resin

Furthermore, when producing a dispersion of a pigment, which is coated with a pigment dispersing resin that is a water-insoluble resin, the pigment dispersing resin is dissolved in an organic solvent for resin dissolution such as methyl ethyl ketone in advance to produce a pigment dispersing resin solution, in which the pigment dispersing resin is neutralized as necessary. A pigment, water, and as necessary a dispersion aid, an organic solvent, and additional organic solvent are added to the pigment dispersing resin solution, the resulting mixture is mixed and stirred (premixing), and then a dispersion treatment is performed using a dispersion device. Thereafter, the organic solvent for resin dissolution is distilled by distillation under reduced pressure, and centrifugal separation, filtration, and solid fraction adjustment are carried out as necessary to obtain a pigment dispersion.

In methods (1-1) and (1-2) above, the dispersion device used during dispersion treatment of the pigment may be any commonly used dispersion device, and examples thereof include a ball mill, a roll mill, a sand mill, a bead mill, a nanomizer, and the like. From thereamong, a bead mill is preferably used, and specifically is commercially available under product names such as Super Mill, Sand Grinder, Agitator Mill, Grain Mill, Dyno Mill, Pearl Mill, and Cobol Mill.

In methods (1-1) and (1-2) above, methods to control the particle size distribution of the pigment include adjusting the size of the grinding media used in the dispersion device mentioned above, changing the material of the grinding media, increasing the filling ratio of the grinding media, changing the shape of the stirring member (agitator), lengthening the dispersion treatment time, performing classification by filtration and centrifugal separation and the like after the dispersion treatment, and a combination of these methods. In order to ensure that the pigment is within a favorable particle size distribution range, the diameter of the grinding media in the dispersion device is preferably 0.1 to 3 mm. Furthermore, grinding media materials such as glass, zircon, zirconia, and titania can be preferably used.

### (1-3) Method of Performing Grinding/Kneading Treatment Using Pigment Dispersing Resin

In addition, in the present invention, a method employing a grinding/kneading treatment described below can also be used favorably. A pigment, a pigment dispersing resin, an organic solvent, an inorganic salt, and as necessary a dispersion aid are kneaded using a kneading device, and then water is added to the resulting mixture, which is mixed and stirred. Then, the inorganic salt and as necessary the organic solvent are removed by centrifugal separation, filtration, and washing, and in addition the solid fraction is adjusted to obtain a pigment dispersion.

The kneading device used in the above method (1-3) may be any typically used dispersion device, but in terms of obtaining a printed material having excellent image quality, color development, and color reproducibility, a kneader or a Trimix is preferably used due to being able to knead a mixture of high viscosity and produce a pigment dispersion containing fine pigments. Note that the particle size distribution of the obtained pigment dispersion can be controlled by adjusting the temperature during kneading.

Furthermore, sodium chloride, barium chloride, potassium chloride, sodium sulfate, potassium sulfate, or the like can be favorably used as the inorganic salt.

### (2) Preparation of Ink

A binder resin, wax, organic solvent, water, and as necessary a surfactant, pH adjuster, and other additives given above are added to the obtained pigment dispersion and stirred and mixed. Note that as necessary the mixture may be stirred and mixed while being heated in the range of 40 to 100°C.

### (3) Removal of Coarse Particles

Coarse particles included in the mixture are removed by techniques such as filtration and centrifugal separation to obtain an aqueous inkjet ink. As a method of filtration separation, a known method can be used as appropriate, but when a filter is used, the diameter of the openings therein is preferably 0.3 to 5µm, and more preferably 0.5 to 3 µm. Furthermore, when filtration is carried out, one type of filter may be used singly, or a plurality of types thereof may be used in combination.

### <Characteristics of Ink>

The ink of an embodiment of the present invention preferably has a viscosity at 25°C that is adjusted to 3 to 20 mPa·s. In this viscosity range, stable discharge characteristics are exhibited not only for heads having a frequency of 4 to 10 KHz but also for heads having a high frequency of 10 to 70 KHz. In particular, by having the viscosity at 25°C be 4 to 10 mPa·s, stable discharge can be achieved even when used for an inkjet head having a design resolution of 600 dpi or more. Note that the above viscosity can be measured according to typical methods. Specifically, the viscosity can be measured using an E-type viscometer (TVE25L viscometer manufactured by Toki Sangyo Co., Ltd.) and using 1 mL of ink.

Furthermore, in terms of obtaining an ink that can be stably discharged, and obtaining a printed material having excellent image quality, the ink of an embodiment of the present invention has a static surface tension at 25°C that is preferably 18 to 35 mN/m, and particularly preferably 20 to 32 mN/m. Note that static surface tension refers to the surface tension measured according to the Wilhelmy method in an environment at 25°C. Specifically, the static surface tension can be measured using a CBVP-Z manufactured by Kyowa Interface Science Co., Ltd. and using a platinum plate.

In addition, from the viewpoint of obtaining excellent image quality by obtaining favorable wettability on a recording medium with prompt orientation of the surfactant after landing on the recording medium, the ink of an embodiment of the present invention has a dynamic surface tension at 10 ms according to the maximum bubble pressure method that is preferably 26 to 36 mN/m, more preferably 28 to 36 mN/m, and particularly preferably 30 to 36 mN/m. Note that the dynamic surface tension herein is a value measured in an environment at 25°C using a bubble pressure dynamic surface tension meter BP100 manufactured by Kruss GmbH.

In the ink of an embodiment of the present invention, in order to obtain a printed material having excellent color development, the average secondary particle size (D50) of a pigment is preferably 40 to 500 nm, more preferably 50 to 400 nm, and particularly preferably 60 to 300 nm. To ensure that the average secondary particle size is within the above favorable ranges, the pigment dispersion treatment step is preferably controlled as described above. Note that the average secondary particle size (D50) of a pigment represents the median diameter on a volume basis measured according to a dynamic light scattering method using a particle size distribution measurement device (herein, a Nanotrac UPA EX-150 manufactured by MicrotracBEL Corporation was used).

### <Set of Aqueous Inkjet Inks>

The chromatic process color inkjet ink of an embodiment of the present invention may be used in only one color. Furthermore, chromatic process color inkjet inks of three colors of cyan, magenta, and yellow may be used as a set. In addition, a chromatic process color inkjet ink (or a set thereof) may be combined with an ink that exhibits a color other than a chromatic process color and used as a set of aqueous inkjet inks.

From thereamong, the chromatic process color inkjet ink of an embodiment of the present invention is preferable because, when used in combination with an ink that exhibits a black color (black ink), it is thereby possible to obtain a color printed image having a jet-black sensation and excellent image quality. In addition, when printing on a recording medium that is not white, a distinct image can be obtained by combined use of an ink that exhibits a white color (white ink).

Furthermore, in addition to black ink and white ink, special color inks that exhibit a violet color, blue color, red color, orange color, green color, brown color, and the like can also be used in combination with chromatic process color inkjet inks (set thereof).

A black ink and/or white ink used in combination with the chromatic process color inkjet ink of an embodiment of the present invention contains pigment and water. Furthermore, besides pigment and water, the black ink and/or white ink may contain an organic solvent, pigment dispersing resin, dispersion aid, binder resin, wax, surfactant, pH adjuster, and other components. The details regarding these components are the same as in the case of the aforementioned chromatic process color inkjet ink.

In particular, from the viewpoint of obtaining a printed material having excellent rub fastness, it is preferable that the black ink and/or white ink contain wax. As the wax, those exemplified above can be used as a wax that can be used in the chromatic process color inkjet ink. In terms of obtaining an ink having excellent discharge stability and rub fastness of a printed material, in the case of a black ink, the blend amount of the wax is preferably 0.2 to 8% by mass, more preferably 0.3 to 5% by mass, and particularly preferably 0.5 to 4% by mass, of the total amount of the black ink. Furthermore, in the case of a white ink, the blend amount of the wax is preferably 0.1 to 6% by mass, more preferably 0.3 to 5% by mass, and particularly preferably 0.5 to 4% by mass, of the total amount of the white ink.

Furthermore, when the black ink contains wax, the blend amount thereof is greater than the blend amount of the wax of the chromatic process color inkjet ink preferably by 0.5% by mass or more, more preferably by 1.0% by mass or more, and particularly preferably by 1.5% by mass or more. The print density and image quality can thereby be enhanced in all of a black inkjet ink, cyan ink, magenta ink, and yellow ink regardless of the drying method and the recording medium.

As pigments which can be used in the black ink, for example, it is possible to use black organic pigments such as aniline black, perylene black, and azo black, and black inorganic pigments such as carbon black, triiron tetraoxide, and copper chrome black. In the present invention, it is preferable to use carbon black because of its high level of blackness and colorability, the fact that a printed material having high print density is obtained even with a small added amount, and the fact that it is easy to procure, and so on.

As the above-mentioned carbon black, it is also possible to use self-dispersing carbon black, which chemically or physically introduces a hydrophilic functional group to the surface of the carbon black and enables dispersion in an aqueous medium without both a dispersing resin and a surfactant. In particular, in terms of suppressing feathering in a high-permeation recording medium and obtaining a printed material having excellent image quality, the black ink preferably contains self-dispersing carbon black, and more preferably contains self-dispersing carbon black and resin-dispersed pigment.

Examples of the above-mentioned self-dispersing carbon black include that in which at least one kind of functional group selected from a carboxyl group, a carbonyl group, a hydroxyl group, a sulfone group, a phosphoric acid group, a phenyl group, a quaternary ammonium, and salts thereof is introduced to the surface of carbon black by chemical bonding either directly or via another functional group. The type and amount of the functional group are determined as appropriate while taking into account the dispersion stability, print density, discharge stability, drying properties, and the like of the self-dispersing carbon black in ink. From thereamong, it is preferable to have an anionic functional group as the above-mentioned functional group, especially in terms of obtaining a printed material having a high print density. Examples of the above-mentioned anionic functional group include a functional group selected from a carboxyl group, carbonyl group, hydroxyl group, sulfone group, phosphate group, and salts thereof. From thereamong, the above-mentioned functional group preferably contains a carboxyl group, a carbonyl group, and a hydroxyl group.

Note that a commercially available product may be used as the self-dispersing carbon black. Examples of commercially available products include, for example, the CAB-O-JET series manufactured by Cabot Corporation, the BONJET series manufactured by Orient Chemical Industries Co., Ltd., the Aqua-Black series manufactured by Tokai Carbon Co., Ltd., the Fuji-JET Black series manufactured by Fuji Pigment Co., Ltd., and the like.

The average secondary particle size of the self-dispersing carbon black is, for example, preferably from 30 nm to 200 nm, more preferably from 50 nm to 170 nm, and particularly preferably from 80 nm to 150 nm. The average secondary particle size (D50) represents the median diameter on a volume basis measured according to a dynamic light scattering method using a particle size distribution measurement device (for example, Nanotrac UPA EX-150 manufactured by MicrotracBEL Corporation).

The total amount of pigment contained in the black ink is preferably 1 to 10% by mass, and more preferably 2 to 10% by mass, of the total mass of the black ink.

Meanwhile, examples of organic pigments used in the above-mentioned white ink include the hollow resin particles disclosed in Japanese Unexamined Patent Application Publication Nos. H3-26724, 2009-263553, and so forth. Furthermore, examples of inorganic pigments include alkaline earth metal sulfates such as barium sulfate, alkaline earth metal carbonates such as calcium carbonate, silicas such as fine powder silicic acid and synthetic silicate, calcium silicate, alumina, alumina hydrate, titanium dioxide, zinc oxide, talc, and clay. From thereamong, titanium dioxide is most preferable from the viewpoint of concealability and tinting strength.

The total amount of pigment contained in the white ink is preferably 3 to 50% by mass weight parts, and more preferably 5 to 30% by weight mass parts, of the total mass of the white ink.

### <Ink-Pretreatment Liquid Set>

The ink of an embodiment of the present invention can also be used in combination with a pretreatment liquid containing a coagulant, in the form of an ink-pretreatment liquid set. By applying a pretreatment liquid containing a coagulant onto a recording medium, it is possible to form a layer (ink aggregation layer) that deliberately causes aggregation of solid components included in the ink. Then, by having the ink land on the ink aggregation layer, bleeding and color irregularities among ink droplets can be prevented and the image quality of printed materials can be significantly improved. Note that this effect is prominent when a high-permeation recording medium is used as a recording medium, and it is possible to obtain a printed material having excellent color development and color reproducibility as well as image quality. Furthermore, depending on the materials used in the pretreatment liquid, the adhesion, rub fastness, and blocking resistance of printed materials can also be further improved.

The term "coagulant" herein means a component that is contained in the ink, destroys the dispersed state of pigment and resin particles and causes them to aggregate, and/or insolubilizes water-soluble resins and causes the ink to thicken. As a coagulant used in the pretreatment liquid combined with the ink of an embodiment of the present invention, from the viewpoint of significantly improving image quality, color development, and color reproducibility, it is preferable to include one or more selected from a metal salt and a cationic polymer compound. From thereamong, from the viewpoint of obtaining excellent image quality, color development, and color reproducibility, it is preferable to use a metal salt as the coagulant, and it is particularly preferable to include a salt of a polyvalent metal ion selected from the group consisting of Ca²⁺, Mg²⁺, Zn²⁺, and Al³⁺. Note that when a metal salt is used as the coagulant, the amount contained thereof is preferably 2 to 30% by mass, and particularly preferably 3 to 25% by mass, relative to the total amount of the pretreatment liquid.

In addition, an organic solvent, surfactant, pH adjuster, anti-foaming agent, preservative, and the like can be added as appropriate to the pretreatment liquid. Specifically, the materials that can be used for each thereof are the same as in the case of the ink described above.

Note that from the viewpoint of obtaining a printed material having excellent image quality when used in combination with the ink of an embodiment of the present invention, the static surface tension of the pretreatment liquid is preferably 20 to 45 mN/m, more preferably 23 to 40 mN/m, and particularly preferably 25 to 37 mN/m. Note that the static surface tension of the pretreatment liquid can be measured using the same method as that used for the static surface tension of the ink.

### <Inkjet Recording Method>

The ink of an embodiment of the present invention is used in a recording method in which the ink is discharged from an inkjet head and applied onto a recording medium (inkjet recording method).

Note that from the viewpoint of preventing drying of organic solvents and wax film formation before the ink is applied onto the recording medium and significantly enhancing the inkjet discharge stability of the ink, and the viewpoint of uniformly dispersing the components in the ink and obtaining a printed material having no image defects such as bleeding, beading, feathering, and bleed-through, it is preferable that the ink be used in a printing device having an ink circulation mechanism configured to communicate with the inkjet head.

An example of an ink circulation mechanism configured to communicate with the inkjet head is a system including: an inkjet head provided with an ink supply port, a nozzle, an ink communication path, and an ink discharge port; an ink supply flow path connected to the ink supply port; and ink discharge flow path connected to the ink discharge port; and a pump connected to the ink supply flow path and/or the ink discharge flow path. Note that the ink supply flow path and the ink discharge flow path may be connected directly or may be connected via another configuration. An example of being connected via another configuration is a configuration in which one end of the ink supply flow path and one end of the ink discharge flow path are both connected to the same ink tank.

Furthermore, in the inkjet head, ink supplied from the ink supply port passes through either the nozzle or the ink communication path. The ink that has flowed into the nozzle is discharged from the inkjet head. Meanwhile, ink that has flowed into the ink communication path is discharged from the ink discharge port, passes through the ink discharge flow path and the ink supply flow path, and returns again to the inkjet head.

As a pass method in the above-mentioned inkjet recording method, either the single-pass method or the serial method may be employed. In the single-pass method, inkjet ink is discharged only once onto the recording medium to perform recording. In the serial method, discharge and recording are performed while a short shuttle head is scanned back and forth in a direction perpendicular to the direction in which the recording medium is conveyed. However, in the case of the serial method, it is necessary to adjust the discharge timing taking into account the movement of the inkjet head, and a deviation in the landing position is likely to occur. Therefore, when printing with the ink of an embodiment of the present invention, the single-pass method is preferably used, particularly a method in which the recording medium passes underneath a fixed inkjet head.

There are also no particular limitations on the method of discharging the ink, and a known method can be used, such as the drop-on-demand method (pressure pulse method) that uses the vibration pressure of a piezo element, and the thermal inkjet (Bubble Jet (registered trademark)) method that uses the pressure generated by a bubble formed by heating the ink, for example. In the present invention, the drop-on-demand method (pressure pulse method) is preferred.

Furthermore, in terms of achieving a large drying load reduction effect and improving color reproducibility and other aspects of image quality, the amount of ink droplets discharged from the inkjet head is preferably 0.2 to 30 picoliters, and more preferably 1 to 20 picoliters.

It is preferable to provide a drying mechanism with which, after the ink of an embodiment of the present invention has been applied onto a recording medium by the inkjet printing method, the aqueous ink on the recording medium is dried. Examples of the drying method used in the drying mechanism include a heating drying method, hot-air drying method, infrared (infrared rays having a wavelength of 700 to 2500 nm, for example) drying method, microwave drying method, drum drying method, and the like.

In the present invention, from the viewpoint of preventing explosive boiling of the liquid components in the ink, and obtaining a printed material having excellent color reproducibility and image quality, the drying temperature is preferably 35 to 100°C when a heat drying method is employed, and the hot-air temperature is preferably 50 to 250°C when a hot-air drying method is employed. Furthermore, from the same viewpoint, when an infrared drying method is employed, it is preferable that 50% or more of the integrated value of the total output of the infrared rays used for infrared irradiation be in the wavelength range of 700 to 1500 nm.

Furthermore, the above drying methods may be used singly, or a plurality thereof may be used in succession or in combination simultaneously. For example, through combined use of a heat drying method and a hot-air drying method, the aqueous ink can be dried more quickly than when each method is used singly.

### <Recording Medium>

The recording medium on which the ink of an embodiment of the present invention is printed is not particularly limited, and any known recording medium can be used as desired, such as a high-permeation recording medium, a low-permeation recording medium, and a non-permeable recording medium. As mentioned above, the ink of an embodiment of the present invention can produce a printed material having excellent image quality, color development, and color reproducibility, regardless of the permeability of the recording medium.

Note that herein, the permeability of a recording medium is determined by a water absorption amount measured by a dynamic scanning absorption meter. Specifically, for a water absorption amount of pure water at a contact time of 100 msec as measured by the following method, a recording medium having a water absorption amount of less than 1 g/m² is considered to be a "non-permeable recording medium", a recording medium having a water absorption amount of 1 g/m² or more and less than 8 g/m² is considered to be a "low-permeation recording medium", and a recording medium having a water absorption amount of 8 g/m² or more is considered to be a "high-permeation recording medium".

The water absorption amount of a recording medium can be measured under the following conditions. The amount of pure water transferred is measured under the conditions given below, using a KM500win manufactured by Kumagai Riki Kogyo Co., Ltd. as a dynamic scanning absorption meter, under the conditions of 23°C and 50% RH, and using a recording medium that is approximately 15 to 20 cm square.
· Measurement method: spiral scanning (spiral method)
· Measurement start radius: 20 mm
· Measurement end radius: 60 mm
· Contact time: 10 to 1,000 msec
· Number of sampling points: 19 (measured to result in approximately equal intervals relative to the square root of the contact time)
· Scanning interval: 7 mm
· Speed switching angle of rotation table: 86.3 degrees
· Head box conditions: width 5 mm, slit width 1 mm

Examples of high-permeation recording mediums include uncoated paper such as woody paper, medium-quality paper, high-quality paper, and recycled paper; fabrics such as cotton, synthetic fiber fabric, silk, linen, and non-woven fabrics; and leather. From thereamong, in terms of obtaining a printed material having excellent color development and image quality for an ink, uncoated paper such as woody paper, medium-quality paper, high-quality paper, and recycled paper is preferred.

Furthermore, examples of non-permeable recording mediums or low-permeation recording mediums include plastic substrates such as polyvinyl chloride, polyethylene terephthalate (PET), polypropylene, polyethylene, nylon, polystyrene, and polyvinyl alcohol; coated paper substrates such as coated paper, art paper, and cast paper; metal substrates such as aluminum, iron, stainless steel, and titanium; and glass substrates.

The recording mediums listed above may have smooth or uneven surfaces, and may be transparent, semi-transparent, or opaque. Furthermore, two or more of these recording mediums may affixed to each other. In addition, a peelable adhesive layer or the like may be provided on the opposite side to the printing surface, or an adhesive layer or the like may be provided on the printed surface subsequent to printing. Furthermore, the shape of the recording medium used in the inkjet recording method of an embodiment of the present invention may be a roll shape or a sheet shape.

Note that in order for it to be possible to improve the wettability of the ink of an embodiment of the present invention, to improve image quality, color reproducibility, and drying properties, and to also improve rub fastness and adhesion for a uniform printed material surface, it is preferable that surface modification such as corona treatment and plasma treatment be performed on the recording mediums listed above.

### <Coating Treatment>

The printed surface of a printed material produced using the ink of an embodiment of the present invention may be subjected to a coating treatment as necessary. Specific examples of the coating treatment include coating or printing of a coating composition, and lamination processing using a dry lamination method, solvent-free lamination method, extrusion lamination method, or the like. Either of these techniques may be selected, or a combination of both may be used.

Note that when a coating treatment is performed on a printed material by coating or printing a coating composition, either of the following methods may be employed as the coating or printing method: a method in which printing is performed on the recording medium in a non-contact manner as in inkjet printing, or a method in which the coating composition is brought into contact with the recording medium to perform printing. Furthermore, when selecting the method of printing the coating composition on the recording medium in a non-contact manner, it is preferable to use, as the coating composition, an ink that contains substantially no colorant component (clear ink), which excludes pigments from the aqueous inkjet ink of an embodiment of the present invention.

### Examples

The present invention is described below in further detail using a series of examples and comparative examples. Note that in the following description, unless specifically stated otherwise, "parts" and "%" represent "parts by mass" and "% by mass", respectively.

### <Production Example for Pigment Dispersing Resin 1>

A reaction container fitted with a gas inlet tube, a thermometer, a condenser, and a stirrer was charged with 93.4 parts of butanol, and the reaction container was flushed with nitrogen gas. The inside of the reaction container was heated to 110°C, after which a mixture of 30 parts of acrylic acid, 35 parts of styrene, and 35 parts of lauryl methacrylate as polymerizable monomers, and 6 parts of V-601 (manufactured by Wako Pure Chemical Industries, Ltd.) as a polymerization initiator was added dropwise over 2 hours to perform a polymerization reaction. Following completion of the dropwise addition, the reaction was carried out for 3 hours at 110°C, after which 0.6 parts of V-601 was added, and the reaction was continued for a further 1 hour at 110°C. Thereafter, the reaction system was cooled to room temperature, 39 parts of dimethylaminoethanol was added to perform neutralization, and then 100 parts of water was added. Thereafter, the mixed solution was heated to at least 100°C and butanol was distilled, and then water was used to adjust the solid fraction to 30%, thereby obtaining a water-based solution of a pigment dispersing resin 1 (solid fraction 30%). Note that the weight average molecular weight of the pigment dispersing resin 1 was 16,000 and the acid value was 230, measured by the methods described above. Furthermore, "water-based solution" mentioned above means a solution containing an aqueous solvent and a component dispersed and/or dissolved in the aqueous solvent.

### <Production Example for Pigment Dispersing Resin 2>

A reaction container fitted with a gas inlet, a thermometer, a condenser, and a stirrer was charged with 40 parts of toluene, 40 parts of benzyl methacrylate as a polymerizable monomer, 0.9 parts of 2,2'-azobisisobutyronitrile as a polymerization initiator, and 3.6 parts of 2-(dodecylthiocarbonothioylthio)-isobutyric acid, and the reaction container was flushed with nitrogen gas. The inside of the reaction container was heated to 75°C and a polymerization reaction was conducted for 3 hours, thereby obtaining a polymer (A block) composed of benzyl methacrylate.

Following completion of the above polymerization reaction, the reaction system was cooled to room temperature, after which 40 parts of toluene, and 17.5 parts of methyl methacrylate, 32.5 parts of stearyl methacrylate, and 15 parts of methacrylic acid as polymerizable monomers were introduced to the reaction container, and the reaction container was flushed with nitrogen gas. The inside of the reaction container was then heated to 75°C and a polymerization reaction was conducted for 3 hours, thereby obtaining an A-B block polymer (pigment dispersing resin 2) in which a copolymer (B block) composed of methyl methacrylate, stearyl methacrylate, and methacrylic acid was added to the A block.

Thereafter, the reaction system was cooled to normal temperature, after which 25 parts of dimethylaminoethanol was added to the reaction container to perform neutralization, and then 200 parts of water was added. Next, the mixed solution was heated for toluene to be distilled, after which water was used to adjust the solid fraction to 30%, thereby obtaining a water-based solution of a pigment dispersing resin 2 (solid fraction 30%). Note that the weight average molecular weight of the pigment dispersing resin 2 was 22,000 and the acid value was 150, measured by the methods described above.

### <Production Example for Pigment Dispersing Resin 3>

A pigment dispersing resin 3 was obtained by performing synthesis with the raw materials, charge amounts, and operation disclosed in Production Example 8 of Japanese Unexamined Patent Application Publication No. 2020-203965. The obtained pigment dispersing resin 3 was then mixed with water to adjust the solid fraction to 30%, thereby obtaining a water-based solution of the pigment dispersing resin 3 (solid fraction 30%). Note that the weight average molecular weight of the pigment dispersing resin 3 was 13,000 and the acid value was 105, measured by the methods described above.

### <Production Example for Pigment Dispersing Resin 4>

X-200 (weight average molecular weight 12,000, acid value 190, hereinafter referred to as "pigment dispersing resin 4") manufactured by Seiko PMC Corporation and water were mixed to adjust the solid fraction to 30%, thereby obtaining a water-based solution of pigment dispersing resin 4 (solid fraction 30%).

### <Production Example for Pigment Dispersion>

Amounts of 15 parts of pigment, 15 parts of a water-based solution of pigment dispersing resin (solid fraction 30%), and 70 parts of water were sequentially introduced into a mixing container equipped with a stirrer, after which premixing was performed. Thereafter, main dispersion was carried out using a Dyno Mill having a capacity of 0.6 L filled with 1800 g of zirconia beads having a 0.5 mm diameter, thereby obtaining by a pigment dispersion (pigment concentration 15%).

The pigments used in the production of pigment dispersions are as follows.
· C.I. Pigment Blue 15:3: "LIONOGEN BLUE FG-7358G" manufactured by Toyocolor Co., Ltd.
· C.I. Pigment Red 150: "Toshiki Red 150TR" manufactured by Tokyo Shikizai Industry Co., Ltd.
· C.I. Pigment Red 122: "FASTGEN SUPER MAGENTA RG" manufactured by DIC Corporation
· C.I. Pigment Yellow 12: "SYMULER FAST YELLOW GFCONC" manufactured by DIC Corporation
· C.I. Pigment Yellow 74: "HANSA YELLOW 5GX01" manufactured by Clariant
· C.I. Pigment Yellow 14: "SYMULER FAST YELLOW 4400" manufactured by DIC Corporation

Furthermore, the combinations of the pigment dispersions produced and the pigments and pigment dispersing resins used as raw materials are as shown in Table 1 below.

### [Table 1]

**Table 1**

| Pigment dispersion | Pigment used | Pigment dispersing resin used |
|---|---|---|
| Pigment dispersion C1 | C.I. Pigment Blue 15:3 | Pigment dispersing resin 1 |
| Pigment dispersion C2 | | Pigment dispersing resin 2 |
| Pigment dispersion C3 | | Pigment dispersing resin 3 |
| Pigment dispersion C4 | | Pigment dispersing resin 4 |
| Pigment dispersion M1 | C.I. Pigment Red 150 | Pigment dispersing resin 1 |
| Pigment dispersion M2 | C.I. Pigment Red 150 and C.I. Pigment Red 122 mixed at mass ratio of 1:1 | Pigment dispersing resin 1 |
| Pigment dispersion M3 | | Pigment dispersing resin 2 |
| Pigment dispersion M4 | | Pigment dispersing resin 3 |
| Pigment dispersion M5 | | Pigment dispersing resin 4 |
| Pigment dispersion Y1 | C.I. Pigment Yellow 12 | Pigment dispersing resin 1 |
| Pigment dispersion Y2 | C.I. Pigment Yellow 74 | Pigment dispersing resin 1 |
| Pigment dispersion Y3 | C.I. Pigment Yellow 14 | Pigment dispersing resin 1 |
| Pigment dispersion Y4 | | Pigment dispersing resin 2 |
| Pigment dispersion Y5 | | Pigment dispersing resin 3 |
| Pigment dispersion Y6 | | Pigment dispersing resin 4 |

### <Production Examples for Resin Particles 1 to 3 (Styrene Methacrylic Resin Particles)>

A reaction container fitted with a gas inlet tube, a thermometer, a condenser, and a stirrer was charged with 40 parts of water and 0.2 parts of AQUALON KH-10 (manufactured by DKS Co. Ltd.) as a surfactant, to produce a surfactant aqueous solution. Furthermore, 25 parts of styrene, 3 parts of methacrylic acid, 62 parts of methyl methacrylate, and 10 parts of butyl acrylate as polymerizable monomers, 1.8 parts of AQUALON KH-10 as a surfactant, and 51.2 parts of water were added in a separate mixing container and mixed thoroughly to produce an emulsion precursor.

An amount of 1.5 parts of the produced emulsion precursor was added to the reaction container containing the surfactant aqueous solution and mixed thoroughly. Next, the temperature inside the reaction container was raised to 60°C, the reaction container was flushed with nitrogen gas, and thereafter 1 part of a potassium persulfate 5% aqueous solution and 0.2 parts of an anhydrous sodium bisulphite 1% aqueous solution were added, and a polymerization reaction was started while the temperature inside the reaction container was maintained at 60°C. After performing the reaction for 5 minutes at 60°C, the remainder of the emulsion precursor (151.5 parts), 9 parts of a potassium persulfate 5% aqueous solution, and 1.8 parts of an anhydrous sodium bisulphite 1% aqueous solution were added dropwise over 1.5 hours, and thereafter the reaction was continued for a further 2 hours. The reaction system was then cooled to 30°C, after which diethylaminoethanol was added to bring the pH of the mixed solution to 8.5, water was additionally used to adjust the solid fraction to 30%, thereby obtaining an aqueous dispersion of resin particles 1 (solid fraction 30%), constituted by styrene methacrylic resin microparticles.

Furthermore, with the exception of altering the polymerizable monomers as shown in Table 2, aqueous dispersions of resin particles 2 and 3 (solid fraction 30%), constituted by styrene methacrylic resin particles, were obtained using the same operations as those described for the resin particles 1.

### [Table 2]

**Table 2**

| | Amount (parts) of polymerizable monomer used | | | | | Resin particle parameters | | |
|---|---|---|---|---|---|---|---|---|
| | St | MAA | MMA | BA | PME-400 | Acid value (mgKOH/g) | Glass transition temperature (° C) | Weight average molecular weight |
| Resin particles 1 | 25 | 3 | 62 | 10 | | 20 | 80 | 18,000 |
| Resin particles 2 | 30 | 10 | 50 | 10 | | 65 | 84 | 21,000 |
| Resin particles 3 | 15 | | 20 | 55 | 10 | 0 | -18 | 19,500 |

Note that the acid values, glass transition temperatures, and weight average molecular weights of resin particles 1 to 3 are also given in Table 2. Furthermore, the abbreviations for polymerizable monomers given in Table 2 are as follows.
· St: styrene
· MAA: methacrylic acid
· MMA: methyl methacrylate
· BA: butyl acrylate
· PME-400: methoxy polyethylene glycol methacrylate (BLEMMER PME-400 manufactured by NOF Corporation)

### <Production Examples for Resin Particles 4 (Urethane Resin Particles) >

A reaction container fitted with a gas inlet, a thermometer, a condenser, and a stirrer was charged with 150 parts of methyl ethyl ketone, and 69 parts of polycarbonate diol having 1,6-hexanediol as the main skeleton (molecular weight 2,000), 11.8 parts of isophorone diisocyanate, 9 parts of hexamethylene diisocyanate, and 8.3 parts of dimethylolpropionic acid as polymerizable monomers, and the reaction container was flushed with nitrogen gas, after which the inside of the reaction container was heated to 80°C and a polymerization reaction was conducted for 6 hours. Next, 1.9 parts of trimethylolpropane was additionally added and the reaction was continued at 80°C. Thereafter, the reaction system was cooled to room temperature, after which water was added and a potassium hydroxide aqueous solution was additionally added while stirring to perform neutralization. The mixed solution was then heated under reduced pressure and methyl ethyl ketone was distilled, after which water was used to adjust the solid fraction to 40%, thereby obtaining an aqueous dispersion of resin particles 4 (solid fraction 40%), constituted by urethane resin particles. Note that the weight average molecular weight of the resin particles 4 was 20,000 and the acid value was 37, measured by the methods described above.

### <Production Examples for Water-Soluble Resins 1 to 3>

With the exception of altering, as shown in Table 3, the composition of the mixture added dropwise to butanol (types and amounts of polymerizable monomer, and the amount of V-601), the amount of V-601 added after reacting for 3 hours at 110°C, and the amount of dimethylaminoethanol (DMAE) used for neutralization, aqueous solutions of water-soluble resins 1 to 3 (solid fraction 40%), which are (meth)acrylic water-soluble resins or styrene-(meth)acrylic water-soluble resins, were obtained using the same operations as those described for the pigment dispersing resin 1. Note that the acid values, glass transition temperatures, and weight average molecular weights of water-soluble resins 1 to 3 are also given in Table 3.

### [Table 3]

**Table 3**

| | Amount (parts) of polymerizable monomer used | | | | Production conditions | | | Water-soluble resin parameters | | |
|---|---|---|---|---|---|---|---|---|---|---|
| | St | MAA | MMA | BA | Amount (parts) of V-601 added initially | Amount (parts) of V-601 added later | DMAE (parts) | Acid value (mgKOH/g) | Glass transition temperature (° C) | Weight average molecular weight |
| Water-soluble resin 1 | | 2 | 88 | 10 | 6 | 0.6 | 2.2 | 12 | 80 | 15,000 |
| Water-soluble resin 2 | | 6 | 84 | 10 | 9 | 0.9 | 6.6 | 38 | 82 | 8,500 |
| Water-soluble resin 3 | 20 | 5 | 5 | 70 | 1.5 | 0.15 | 5.5 | 31 | -20 | 38,000 |

### <Production Examples for Chromatic Process Color Ink Sets 1 to 56>

The materials described below were sequentially introduced into a mixing container while stiring with a disper mixer, and the mixture was stirred until sufficiently uniform. Thereafter, filtration was conducted through a membrane filter having a pore size of 1 µm, and a cyan ink 1 was prepared. Furthermore, with the exception of using pigment dispersions M1 and Y1 instead of pigment dispersion C1, a magenta ink 1 and a yellow ink 1 were prepared by the same method as that used for the above-mentioned cyan ink. The cyan ink 1, magenta ink 1, and yellow ink 1 formed a chromatic process color ink set 1.

| | | |
|---|---|---|
| | · Pigment dispersion C1 (pigment concentration 15%) | 26.7 parts |
| | · AQUACER 515 (solid fraction 35%, polyethylene-based wax manufactured by BYK-Chemie GmbH) | 2.8 parts |
| | · Water-soluble resin 2 (solid fraction 40%) | 20 parts |
| | · Propylene glycol monomethyl ether | 5 parts |
| | · 1,2-propanediol | 7 parts |
| | · 1,2-hexanediol | 5 parts |
| | · Triethanolamine | 0.5 parts |
| | · Surfynol 104 | 1 part |
| | · TEGO WET 280 | 1 part |
| | · Proxel GXL | 0.05 parts |
| | · Ion-exchanged water | 30.95 parts |

Furthermore, with the exception of using the materials given in Table 4 below, chromatic process color ink sets 2 to 56 were obtained using the same method as that used for the chromatic process color ink set 1. Examples 4, 7, 8, 9, 10 and 38 are outside the scope of appended claims.

### [Table 4]

**Table 4**

| | | | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|---|---|
| | | | | | 1 | 2 | 3 | 4 | 5 | 6 | 7 | 8 | 9 | 10 | 11 | 12 | 13 | 14 |
| Pigment dispersion | | | Pigment dispersion combination | | A | A | A | A | A | A | A | A | A | A | A | A | A | A |
| | | | Pigment dispersion blend amount | | 26.7 | 26.7 | 26.7 | 26.7 | 26.7 | 26.7 | 26.7 | 26.7 | 26.7 | 26.7 | 26.7 | 26.7 | 26.7 | 26.7 |
| Wax | | | P5300 | | | | | | | | | | | | | | | |
| | | | AQ515 | | 2.8 | 2.8 | 2.8 | 2.8 | 2.8 | 2.8 | 2.8 | 2.8 | 2.8 | 2.8 | 2.8 | 2.8 | 2.8 | 2.8 |
| | | | AQ541 | | | | | | | | | | | | | | | |
| | | | FE230N | | | | | | | | | | | | | | | |
| Binder resin | Resin particles | | Resin particles 1 | | | | | | | | | | | | | | | |
| | | | Resin particles 2 | | | | | | | | | | | | | | | |
| | | | Resin particles 3 | | | | | | | | | | | | | | | |
| | | | Resin particles 4 | | | | | | | | | | | | | | | |
| | Water-soluble resin | | Water-soluble resin 1 | | | | | | | | | | | | | | | |
| | | | Water-soluble resin 2 | | 20.0 | 20.0 | 20.0 | 20.0 | 20.0 | 20.0 | 20.0 | 20.0 | 20.0 | 20.0 | 20.0 | 20.0 | 20.0 | 20.0 |
| | | | Water-soluble resin 3 | | | | | | | | | | | | | | | |
| | | | | Boiling point | | | | | | | | | | | | | | |
| Organic solvent | Having a boiling point of 190° C or lower | Glycol monoalkyl ether-based solvent | MP | 121 | 5.0 | | | | 5.0 | | | | | | 5.0 | 5.0 | | 2.0 |
| | | | MB | 158 | | 5.0 | | | | 5.0 | | | 5.0 | | | | | |
| | | | MMB | 174 | | | 5.0 | | | | | | 7.0 | | | | 5.0 | 3.0 |
| | | Dihydric alcohol-based solvent | PG | 188 | 7.0 | 7.0 | 7.0 | 7.0 | | | | | | 10.0 | 7.0 | 7.0 | | |
| | | | 2,3-BD | 182 | | | | | 7.0 | 7.0 | 7.0 | 7.0 | | | | | 7.0 | 7.0 |
| | | Others | IPA | 82 | | | | | | | 5.0 | | | | | | | |
| | | | DEDG | 189 | | | | 5.0 | | | | 5.0 | | | | | | |
| | | Others (also serving as pH adjuster) | DMAE | 133 | | | | | | | | | | | 0.5 | | | |
| | | | APOH | 159 | | | | | | | | | | | | 0.5 | | |
| | Others | | 1,2-BD | 191 | | | | | | | | | | | | | | |
| | | | HeG | 208 | | | | | | | | | | | | | | |
| | | | 1,2-HeD | 223 | 5.0 | 5.0 | 5.0 | 5.0 | 5.0 | 5.0 | 5.0 | 5.0 | 5.0 | 5.0 | 5.0 | 5.0 | 5.0 | 5.0 |
| | | | BDG | 230 | | | | | | | | | | | | | | |
| | | | GY | 290 | | | | | | | | | | | | | | |
| | Others (also serving as pH adjuster) | | TEA | 335 | 0.5 | 0.5 | 0.5 | 0.5 | 0.5 | 0.5 | 0.5 | 0.5 | 0.5 | 0.5 | | | 0.5 | 0.5 |
| pH adjuster | | | NaOH | | | | | | | | | | | | | | | |
| Surfactant | Acetylenediol-based | | S.104 | | 1.0 | 1.0 | 1.0 | 1.0 | 1.0 | 1.0 | 1.0 | 1.0 | 1.0 | 1.0 | 1.0 | 1.0 | 1.0 | 1.0 |
| | | | S.465 | | | | | | | | | | | | | | | |
| | Siloxane-based | | TW280 | | 1.0 | 1.0 | 1.0 | 1.0 | 1.0 | 1.0 | 1.0 | 1.0 | 1.0 | 1.0 | 1.0 | 1.0 | 1.0 | 1.0 |
| Others | Preservative | | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 |
| lon-exchanged water | | | | | 30.95 | 30.95 | 30.95 | 30.95 | 30.95 | 30.95 | 30.95 | 30.95 | 30.95 | 32.95 | 30.95 | 30.95 | 30.95 | 30.95 |
| Binder resin amount | | | | | 8.0 | 8.0 | 8.0 | 8.0 | 8.0 | 8.0 | 8.0 | 8.0 | 8.0 | 8.0 | 8.0 | 8.0 | 8.0 | 8.0 |
| Amount of organic solvent having boiling point of 190° C or lower | | | | | 12.0 | 12.0 | 12.0 | 12.0 | 12.0 | 12.0 | 12.0 | 12.0 | 12.0 | 10.0 | 12.5 | 12.5 | 12.0 | 12.0 |
| S/R | | | | | 1.56 | 2.19 | 2.19 | 2.19 | 1.56 | 2.19 | 1.56 | 2.19 | 2.19 | 1.94 | 1.50 | 1.56 | 2.19 | 1.94 |
| Weight average boiling point of organic solvent | | | | | 183.1 | 193.7 | 198.3 | 202.6 | 180.7 | 191.2 | 169.5 | 200.1 | 188.0 | 204.2 | 177.4 | 178.1 | 195.8 | 189.7 |
| Evaluation result | Evaluation 1 | | Discharge stability | | 4 | 4 | 4 | 2 | 4 | 4 | 2 | 2 | 2 | 3 | 3 | 4 | 3 | 4 |
| | Evaluation 2 | | Image quality (bleeding) | | 4 | 4 | 4 | 3 | 4 | 4 | 3 | 2 | 3 | 3 | 4 | 4 | 3 | 4 |
| | Evaluation 3 | | Image quality (beading: coated paper) | | 4 | 4 | 4 | 3 | 4 | 4 | 3 | 3 | 3 | 3 | 4 | 4 | 3 | 4 |
| | Evaluation 4 | | Rub fastness | | 4 | 4 | 4 | 4 | 4 | 4 | 3 | 4 | 4 | 3 | 4 | 4 | 4 | 4 |
| | Evaluation 5 | | Image quality (feathering) | | 4 | 4 | 4 | 2 | 4 | 4 | 3 | 2 | 3 | 3 | 4 | 4 | 3 | 4 |
| | Evaluation 6 | | Bleed-through | | 4 | 4 | 4 | 2 | 4 | 4 | 3 | 2 | 2 | 4 | 4 | 4 | 2 | 3 |

**[Table 4]**

| Table 4 (continued) | | | | | | | | | | | | | | | | | | |
|---|---|---|---|---|---|---|---|---|---|---|---|---|---|---|---|---|---|---|
| | | | | | Example 15 | Example 16 | Example 17 | Example 18 | Example 19 | Example 20 | Example 21 | Example 22 | Example 23 | Example 24 | Example 25 | Example 26 | Example 27 | Example 28 |
| | | | | | 15 | 16 | 17 | 18 | 19 | 20 | 21 | 22 | 23 | 24 | 25 | 26 | 27 | 28 |
| Pigment dispersion | | | Pigment dispersion combination | | A | A | A | A | A | A | A | A | A | A | A | A | A | A |
| | | | Pigment dispersion blend amount | | 26.7 | 26.7 | 26.7 | 26.7 | 26.7 | 26.7 | 26.7 | 26.7 | 26.7 | 26.7 | 26.7 | 26.7 | 26.7 | 26.7 |
| Wax | | | P5300 | | | | | | | | | | 3.3 | | | | | |
| | | | AQ515 | | 2.8 | 2.8 | 2.8 | 2.8 | 2.8 | 2.8 | 2.8 | 2.8 | | | | 12.0 | 2.8 | 2.8 |
| | | | AQ541 | | | | | | | | | | | 3.3 | | | | |
| | | | FE230N | | | | | | | | | | | | 3.3 | | | |
| Binder resin | Resin particles | | Resin particles 1 | | | | 11.0 | | | | | | | | | | | |
| | | | Resin particles 2 | | | | | 11.0 | | | | | | | | | | |
| | | | Resin particles 3 | | | | | | 11.0 | | | | | | | | | |
| | | | Resin particles 4 | | | | | | | | | | | | | | | |
| | Water-soluble resin | | Water-soluble resin 1 | | | | | | | 20.0 | | | | | | | | |
| | | | Water-soluble resin 2 | | 20.0 | 20.0 | | | | | | 40.0 | 20.0 | 20.0 | 20.0 | 20.0 | 20.0 | 20.0 |
| | | | Water-soluble resin 3 | | | | | | | | 20.0 | | | | | | | |
| | | | | Boiling point | | | | | | | | | | | | | | |
| Organic solvent | Having a boiling point of 190° C or lower | Glycol monoalkyl ether-based solvent | MP | 121 | 5.0 | 2.0 | 5.0 | 5.0 | 5.0 | 5.0 | 5.0 | 5.0 | 5.0 | 5.0 | 5.0 | 5.0 | 5.0 | 5.0 |
| | | | MB | 158 | | | | | | | | | | | | | | |
| | | | MMB | 174 | | | | | | | | | | | | | | |
| | | Dihydric slcohol-based solvent | PG | 188 | 17.0 | 4.0 | 7.0 | 7.0 | 7.0 | 7.0 | 7.0 | 7.0 | 7.0 | 7.0 | 7.0 | 7.0 | 7.0 | 7.0 |
| | | | 2,3-BD | 182 | | | | | | | | | | | | | | |
| | | Others | IPA | 82 | | | | | | | | | | | | | | |
| | | | DEDG | 189 | | | | | | | | | | | | | | |
| | | Others (also serving as pH adjuster) | DMAE | 133 | | | | | | | | | | | | | | |
| | | | APOH | 159 | | | | | | | | | | | | | | |
| | Others | | 1,2-BD | 191 | | | | | | | | | | | | | | |
| | | | HeG | 208 | | | | | | | | | | | | | | |
| | | | 1,2-HeD | 223 | 5.0 | 1.5 | 5.0 | 5.0 | 5.0 | 5.0 | 5.0 | 5.0 | 5.0 | 5.0 | 5.0 | 5.0 | 5.0 | 5.0 |
| | | | BDG | 230 | | | | | | | | | | | | | | |
| | | | GY | 290 | | | | | | | | | | | | | | |
| | Others (also serving as pH adjuster) | | TEA | 335 | 0.5 | 0.5 | 0.5 | 0.5 | 0.5 | 0.5 | 0.5 | 0.5 | 0.5 | 0.5 | 0.5 | 0.5 | 0.5 | 0.5 |
| pH adjuster | | | NaOH | | | | | | | | | | | | | | | |
| Surfactant | Acetylenediol-based | | S.104 | | 1.0 | 1.0 | 1.0 | 1.0 | 1.0 | 1.0 | 1.0 | 1.0 | 1.0 | 1.0 | 1.0 | 1.0 | | |
| | | | S.465 | | | | | | | | | | | | | | 2.0 | 1.0 |
| | Siloxane-based | | TW280 | | 1.0 | 1.0 | 1.0 | 1.0 | 1.0 | 1.0 | 1.0 | 1.0 | 1.0 | 1.0 | 1.0 | 1.0 | | 1.0 |
| Others | Preservative | | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 |
| lon-exchanged water | | | | | 20.95 | 40.45 | 39.95 | 39.95 | 39.95 | 30.95 | 30.95 | 10.95 | 30.45 | 30.45 | 30.45 | 21.75 | 30.95 | 30.95 |
| Binder resin amount | | | | | 8.0 | 8.0 | 3.3 | 3.3 | 3.3 | 8.0 | 8.0 | 16.0 | 8.0 | 8.0 | 8.0 | 8.0 | 8.0 | 80 |
| Amount of organic solvent having boiling point of 190° C or lower | | | | | 22.0 | 6.0 | 12.0 | 12.0 | 12.0 | 12.0 | 12.0 | 12.0 | 12.0 | 12.0 | 12.0 | 12.0 | 12.0 | 12.0 |
| S/R | | | | | 2.81 | 0.75 | 2.84 | 2.84 | 2.84 | 1.56 | 1.56 | 0.78 | 1.56 | 1.56 | 1.56 | 1.56 | 1.56 | 1.56 |
| Weight average boiling point of organic solvent | | | | | 185.0 | 187.1 | 183.1 | 183.1 | 183.1 | 183.1 | 183.1 | 183.1 | 183.1 | 183.1 | 183.1 | 183.1 | 183.1 | 183.1 |
| Evaluation result | Evaluation 1 | | Discharge stability | | 3 | 2 | 3 | 3 | 4 | 4 | 4 | 2 | 3 | 3 | 3 | 2 | 3 | 4 |
| | Evaluation 2 | | Image quality (bleeding) | | 4 | 3 | 4 | 4 | 3 | 3 | 2 | 3 | 4 | 4 | 3 | 4 | 2 | 4 |
| | Evaluation 3 | | Image quality (beading: coated paper) | | 4 | 2 | 4 | 4 | 3 | 3 | 3 | 4 | 4 | 4 | 2 | 3 | 2 | 4 |
| | Evaluation 4 | | Rub fastness | | 3 | 3 | 4 | 4 | 3 | 4 | 3 | 4 | 3 | 4 | 3 | 4 | 3 | 4 |
| | Evaluation 5 | | Image quality (feathering) | | 4 | 3 | 3 | 3 | 2 | 4 | 2 | 3 | 4 | 4 | 4 | 3 | 2 | 4 |
| | Evaluation 6 | | Bleed-through | | 4 | 3 | 3 | 2 | 2 | 4 | 3 | 4 | 4 | 4 | 4 | 4 | 2 | 4 |

**[Table 4]**

| **Table 4 (continued)** | | | | | | | | | | | | | | | | | | |
|---|---|---|---|---|---|---|---|---|---|---|---|---|---|---|---|---|---|---|
| | | | | | Example 29 | Example 30 | Example 31 | Example 32 | Example 33 | Example 34 | Example 35 | Example 36 | Example 37 | Example 38 | Example 39 | Example 40 | Example 41 | Example 42 |
| | | | | | 29 | 30 | 31 | 32 | 33 | 34 | 35 | 36 | 37 | 38 | 39 | 40 | 41 | 42 |
| Pigment dispersion | | | Pigment dispersion combination | | A | B | C | D | E | F | G | H | G | A | A | A | A | A |
| | | | Pigment dispersion blend amount | | 26.7 | 26.7 | 26.7 | 26.7 | 26.7 | 26.7 | 26.7 | 26.7 | 26.7 | 26.7 | 26.7 | 26.7 | 26.7 | 26.7 |
| Wax | | | P5300 | | | | | | | | | | | | | | | |
| | | | AQ515 | | 2.8 | 2.8 | 2.8 | 2.8 | 2.8 | 2.8 | 2.8 | 2.8 | 2.8 | 2.8 | 2.8 | 2.8 | 2.8 | 2.8 |
| | | | AQ541 | | | | | | | | | | | | | | | |
| | | | FE230N | | | | | | | | | | | | | | | |
| Binder resin | Resin particles | | Resin particles 1 | | | | | | | | | | | | | | | |
| | | | Resin particles 2 | | | | | | | | | | | | | | | |
| | | | Resin particles 3 | | | | | | | | | | | | | | | |
| | | | Resin particles 4 | | | | | | | | | | | | | | | |
| | Water-soluble resin | | Water-soluble resin 1 | | | | | | | | | | | | | | | |
| | | | Water-soluble resin 2 | | 20.0 | 20.0 | 20.0 | 20.0 | 20.0 | 20.0 | 20.0 | 20.0 | 20.0 | 20.0 | 20.0 | 20.0 | 20.0 | 20.0 |
| | | | Water-soluble resin 3 | | | | | | | | | | | | | | | |
| | | | | Boiling point | | | | | | | | | | | | | | |
| Organic solvent | Having a boiling point of 190° C or lower | Glycol monoalkyl ether-based solvent | MP | 121 | 5.0 | 5.0 | 5.0 | 5.0 | 5.0 | 5.0 | 5.0 | 5.0 | | | 5.0 | 5.0 | 5.0 | 5.0 |
| | | | MB | 1 158 | | | | | | | | | 5.0 | 7.0 | | | | |
| | | | MMB | 174 | | | | | | | | | | 10.0 | | | | |
| | | Dihydric alcohol-based solvent | PG | 188 | 7.0 | 7.0 | 7.0 | 7.0 | 7.0 | 7.0 | 7.0 | 7.0 | | | 7.0 | 7.0 | 21.0 | 21.0 |
| | | | 2,3-BD | 182 | | | | | | | | | 7.0 | | | | | |
| | | Others | IPA | 82 | | | | | | | | | | | | | | |
| | | | DEDG | 189 | | | | | | | | | | | | | | |
| | | Others (also serving as pH adjuster) | DMAE | 133 | | | | | | | | | | | | | | |
| | | | APOH | 159 | | | | | | | | | | | | | | |
| | Others | | 1,2-BD | 191 | | | | | | | | | | | 10.0 | | | |
| | | | HeG | 208 | | | | | | | | | | | | | | |
| | | | 1,2-HeD | 223 | 5.0 | 5.0 | 5.0 | 5.0 | 5.0 | 5.0 | 5.0 | 5.0 | 5.0 | | | | | |
| | | | BDG | 230 | | | | | | | | | | | | | | |
| | | | GY | 290 | | | | | | | | | | | | 100 | | |
| | Others (also serving as pH adjuster) | | TEA | 335 | | 0.5 | 0.5 | 0.5 | 0.5 | 0.5 | 0.5 | 0.5 | 0.5 | 0.5 | 0.5 | 0.5 | 0.5 | |
| pH adjuster | | | NaOH | | 0.5 | | | | | | | | | | | | | |
| Surfactant | Acetylenediol-based | | S.104 | | 1.0 | 1.0 | 1.0 | 1.0 | 1.0 | 1.0 | 1.0 | 1.0 | 1.0 | 1.0 | 1.0 | 1.0 | 1.0 | 1.0 |
| | | | S.465 | | | | | | | | | | | | | | | |
| | Siloxane-based | | TW280 | | 1.0 | 1.0 | 1.0 | 1.0 | 1.0 | 1.0 | 1.0 | 1.0 | 1.0 | 1.0 | 1.0 | 1.0 | 1.0 | 1.0 |
| Others | Preservative | | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 |
| Ion-exchanged water | | | | | 30.95 | 30.95 | 30.95 | 30.95 | 30.95 | 30.95 | 30.95 | 30.95 | 30.95 | 30.95 | 25.95 | 25.95 | 21.95 | 22.45 |
| Binder resin amount | | | | | 8.0 | 8.0 | 8.0 | 8.0 | 8.0 | 8.0 | 8.0 | 8.0 | 8.0 | 8.0 | 8.0 | 8.0 | 8.0 | 8.0 |
| Amount of organic solvent having boiling point of 190° C or lower | | | | | 12.0 | 12.0 | 12.0 | 12.0 | 12.0 | 12.0 | 12.0 | 12.0 | 12.0 | 17.0 | 12.0 | 12.0 | 26.0 | 26.0 |
| S/R | | | | | 1.50 | 1.56 | 1.56 | 1.56 | 1.56 | 1.56 | 1.56 | 1.56 | 2.19 | 2.19 | 2.19 | 2.19 | 2.69 | 2.63 |
| Weight average boiling point of organic solvent | | | | | 178.7 | 183.1 | 183.1 | 183.1 | 183.1 | 183.1 | 183.1 | 183.1 | 191.2 | 172.2 | 177.6 | 221.8 | 178.3 | 175.3 |
| Evaluation result | Evaluation 1 | | Discharge stability | | 2 | 4 | 4 | 4 | 4 | 4 | 3 | 3 | 3 | 2 | 3 | 4 | 2 | 2 |
| | Evaluation 2 | | Image quality (bleeding) | | 3 | 4 | 4 | 4 | 4 | 4 | 4 | 4 | 4 | 4 | 3 | 2 | 3 | 3 |
| | Evaluation 3 | | Image quality (beading: coated paper) | | 4 | 4 | 4 | 4 | 4 | 4 | 4 | 4 | 4 | 3 | 3 | 3 | 3 | 3 |
| | Evaluation 4 | | Rub fastness | | 3 | 4 | 4 | 4 | 4 | 4 | 4 | 4 | 4 | 3 | 4 | 4 | 3 | 3 |
| | Evaluation 5 | | Image quality (feathering) | | 4 | 4 | 4 | 4 | 4 | 4 | 4 | 4 | 4 | 3 | 4 | 2 | 3 | 3 |
| | Evaluation 6 | | Bleed-through | | 2 | 4 | 4 | 4 | 4 | 4 | 5 | 5 | 5 | 2 | 4 | 2 | 2 | 2 |

**[Table 4]**

| **Table 4 (continued)** | | | | | | | | | | | | | | | | | | |
|---|---|---|---|---|---|---|---|---|---|---|---|---|---|---|---|---|---|---|
| | | | | | Example 43 | Example 44 | Example 45 | Example 46 | Example 47 | Example 48 | Example 49 | Example 50 | Example 51 | Comparative example 1 | Comparative example 2 | Comparative example 3 | Comparative exampled | Comparative example 5 |
| | | | | | 43 | 44 | 45 | 46 | 47 | 48 | 49 | 50 | 51 | 52 | 53 | 54 | 55 | 56 |
| Pigment dispersion | | | Pigment dispersion combination | | A | A | A | A | A | A | A | A | A | A | A | A | A | A |
| | | | Pigment dispersion blend amount | | 26.7 | 26.7 | 26.7 | 26.7 | 26.7 | 26.7 | 26.7 | 26.7 | 26.7 | 26.7 | 26.7 | 26.7 | 26.7 | 26.7 |
| Wax | | | P5300 | | | | | | | | | | | | | | | |
| | | | AQ515 | | 2.8 | 2.8 | 2.8 | 2.8 | 2.8 | | 2.8 | 2.8 | 2.8 | | | 2.8 | 2.8 | 2.8 |
| | | | AQ541 | | | | | | | 3.3 | | | | | | | | |
| | | | FE230N | | | | | | | | | | | | | | | |
| Binder resin | Resin particles | | Resin particles 1 | | | | | | 20.0 | 20.0 | | | | | | | | |
| | | | Resin particles 2 | | | | | | | | 20.0 | | | | | | | 12.5 |
| | | | Resin particles 3 | | | | | | | | | 20.0 | | | 25.0 | | | |
| | | | Resin particles 4 | | | | | | | | | | 15.0 | | | | | |
| | Water-soluble resin | | Water-soluble resin 1 | | | | | | | | | | | | | | | |
| | | | Water-soluble resin 2 | | 18.5 | 18.5 | 15.0 | 15.0 | | | | | | 20.0 | | 20.0 | 12.5 | |
| | | | Water-soluble resin 3 | | | | | | | | | | | | | | | |
| | | | | Boiling point | | | | | | | | | | | | | | |
| Organic solvent | Having a boiling point of 190° C or lower | Glycol monoalkyl ether-based solvent | MP | 121 | 5.0 | 5.0 | 5.0 | 5.0 | 5.0 | 5.0 | 5.0 | 5.0 | 5.0 | 5.0 | 2.0 | | 5.0 | |
| | | | MB | 158 | | | | | | | | | | | | | | |
| | | | MMB | 174 | | | | | | | | | | | | | | |
| | | Dihydrig alcohol-based solvent | PG | 188 | 21.0 | 17.5 | 17.5 | 17.5 | 17.5 | 17.5 | 17.5 | 17.5 | 17.5 | 7.0 | 20.0 | | 10.0 | 15.0 |
| | | | 2,3-BD | 182 | | | | | | | | | | | | | | |
| | | Others | IPA | 82 | | | | | | | | | | | | | | |
| | | | DEDG | 189 | | | | | | | | | | | | | | |
| | | Uthers (also serving as pH adiuster) | DMAE | 133 | | | | | | | | | | | | | | 1.0 |
| | | | APOH | 159 | | | | | | | | | | | | | | |
| | Others | | 1,2-BD | 191 | | | | | | | | | | | 2.0 | 10.0 | | |
| | | | HeG | 208 | | | | | | | | | | | | | | 5.0 |
| | | | 1,2-HeD | 223 | | | | | | | | | | 5.0 | | 5.0 | 10.0 | |
| | | | BDG | 230 | | | | | | | | | | | 2.0 | | | |
| | | | GY | 290 | | | | | | | | | | | | | | |
| | Others (also serving as pH adjuster) | | TEA | 335 | | | | | | | | | | 0.5 | 0.5 | 0.5 | 0.5 | |
| pH adjuster | | | NaOH | | | | | | | | | | | | | | | |
| Surfactant | Acetylenediol-based | | S.104 | | 1.0 | 1.0 | 1.0 | 1.0 | 1.0 | 1.0 | 1.0 | 1.0 | 1.0 | 1.0 | 1.0 | 1.0 | 1.0 | 1.0 |
| | | | S.465 | | | | | 1.0 | 1.0 | 1.0 | 1.0 | 1.0 | 1.0 | | | | | |
| | Siloxane-based | | TW280 | | 1.0 | 1.0 | 1.0 | 1.0 | 1.0 | 1.0 | 1.0 | 1.0 | 1.0 | 1.0 | 1.0 | 1.0 | 1.0 | 1.0 |
| Others | Preservative | | Proxel GXL | | 0.05 | 0.05 | 0.05 | 0.05 | 0.05 | 0.05 | 0.05 | 0.05 | 0.05 | 0.05 | 0.05 | 0.05 | 0.05 | 0.05 |
| Ion-exchanged water | | | | | 23.95 | 27.45 | 30.95 | 29.95 | 29.95 | 29.95 | 29.95 | 29.95 | 29.95 | 33.75 | 19.75 | 32.95 | 30.45 | 34.95 |
| Binder resin amount | | | | | 7.4 | 7.4 | 6.0 | 6.0 | 6.0 | 6.0 | 6.0 | 6.0 | 6.0 | 8.0 | 10.0 | 8.0 | 5.0 | 5.0 |
| Amount of organic solvent having boiling point of 190° C or lower | | | | | 26.0 | 22.5 | 22.5 | 22.5 | 22.5 | 22.5 | 22.5 | 22.5 | 22.5 | 12.0 | 22.0 | 0.0 | 15.0 | 16.0 |
| S/R | | | | | 2.84 | 2.36 | 2.92 | 2.92 | 2.92 | 2.92 | 2.92 | 2.92 | 2.92 | 1.56 | 2.45 | 1.94 | 4.10 | 4.00 |
| Weight average boiling point of organic solvent | | | | | 175.3 | 173.3 | 173.3 | 173.3 | 173.3 | 173.3 | 173.3 | 173.3 | 173.3 | 183.1 | 189.2 | 205.6 | 191.5 | 190.1 |
| Evaluation result | Evaluation 1 | | Discharge stability | | 3 | 3 | 4 | 4 | 4 | 4 | 4 | 4 | 4 | 3 | 1 | 3 | 2 | 1 |
| | Evaluation 2 | | Image quality (bleeding) | | 2 | 3 | 2 | 3 | 3 | 3 | 3 | 3 | 3 | 1 | 2 | 1 | 1 | 3 |
| | Evaluation 3 | | Image quality (beading: coated paper) | | 3 | 4 | 4 | 4 | 4 | 4 | 4 | 4 | 4 | 3 | 2 | 1 | 2 | 2 |
| | Evaluation 4 | | Rub fastness | | 2 | 3 | 3 | 4 | 4 | 4 | 4 | 4 | 4 | 1 | 3 | 3 | 3 | 2 |
| | Evaluation 5 | | Image quality (feathering) | | 2 | 3 | 2 | 3 | 3 | 3 | 3 | 3 | 3 | 2 | 1 | 3 | 1 | 1 |
| | Evaluation 6 | | Bleed-through | | 2 | 3 | 3 | 4 | 4 | 4 | 4 | 3 | 4 | 1 | 2 | 1 | 1 | 1 |

Note that "Combination of pigment dispersions" in Table 4 indicates the combination of pigment dispersions used in the production of each of the cyan ink, magenta ink, and yellow ink, which are included in the chromatic process color ink set. Specifically, the cyan ink, magenta ink, and yellow ink were produced with the combinations shown in Table 5 below.

### [Table 5]

**Table 5**

| Pigment dispersion combination | Pigment dispersion used in production of cyan ink | Pigment dispersion used in production of magenta ink | Pigment dispersion used in production of yellow ink |
|---|---|---|---|
| A | C1 | M1 | Y1 |
| B | C1 | M2 | Y1 |
| C | C1 | M2 | Y2 |
| D | C1 | M1 | Y2 |
| E | C1 | M2 | Y3 |
| F | C2 | M3 | Y4 |
| G | C3 | M4 | Y5 |
| H | C4 | M5 | Y6 |

Furthermore, the materials shown in Table 4 are as follows.

### (Wax)

· P5300: HYTEC P5300 (manufactured by TOHO Chemical Industry Co., Ltd., polypropylene-based wax, solid fraction 30% water dispersion, melting point 146°C, average particle size 78 nm)
· AQ515: AQUACER 515 (manufactured by BYK-Chemie GmbH, polyethylene-based wax, solid fraction 35% water dispersion, melting point 135°C, average particle size 36 nm)
· AQ541: AQUACER 541 (manufactured by BYK-Chemie GmbH, polyethylene-based wax, solid fraction 30% water dispersion, melting point 80°C, average particle size 180 nm)
· FE230N: CHALINE FE230N (manufactured by Nissin Chemical Industry Co., Ltd., silicon-based wax, solid fraction 30% water dispersion, average particle size 270 nm)

### (Water-Soluble Organic Solvent)

· MP: Propylene glycol monomethyl ether (boiling point 121°C, surface tension 26 mN/m)
· MB: 3-methoxy-1-butanol (boiling point 158°C, surface tension 29 mN/m)
· MMB: 3-methoxy-3-methyl-1-butanol (boiling point 174°C, surface tension 30 mN/m)
· PG: Propylene glycol (boiling point 188°C, surface tension 35 mN/m)
· 2,3-BD: 2,3-butanediol (boiling point 182°C, surface tension 35 mN/m)
· IPA: Isopropanol (boiling point 82°C, surface tension 21 mN/m)
· DEDG: Diethylene glycol diethyl ether (boiling point 189°C, surface tension 23 mN/m)
· 1,2-BD: 1,2-butanediol (boiling point 191°C, surface tension 32 mN/m)
· HeG: Ethylene glycol monohexyl ether (boiling point 208°C, surface tension 25 mN/m)
· 1,2-HeD: 1,2-hexanediol (boiling point 223°C, surface tension 26 mN/m)
· BDG: Diethylene glycol monobutyl ether (boiling point 230°C, surface tension 28 mN/m)
· GY: Glycerin (boiling point 290°C, surface tension 62 mN/m)

### (Surfactant)

· S.104: Surfynol 104 (acetylenediol-based surfactant manufactured by Nissin Chemical Industry Co., Ltd., HLB value 3.0)
· S.465: Surfynol 465 (acetylenediol-based surfactant manufactured by Nissin Chemical Industry Co., Ltd., HLB value 13.2)
· TW280: TEGO Wet 280 (siloxane-based surfactant manufactured by Evonik Industries AG, HLB value 3.5)

### (pH Adjusters)

· DMAE: Dimethylaminoethanol (pKa value 9.9, boiling point 133°C)
· APOH: 1-amino-2-propanol (pKa value 9.4, boiling point 159°C)
· TEA: Triethanolamine (pKa value 7.8, boiling point 335°C)
· NaOH: 20 w/v% sodium hydroxide aqueous solution

### (Others)

· Proxel GXL: 1,2-benzoisothiazol-3-one solution manufactured by Arch Chemicals, Inc. (preservative)

### [Examples 1 to 51, Comparative Examples 1 to 5]

Evaluations 1 to 6 described below were conducted for the above produced aqueous inkjet inks 1 to 56. The evaluation results were as shown in Table 4.

### <Evaluation 1: Evaluation of Discharge Stability>

Three Samba G3L (manufactured by FUJIFILM Dimatix) inkjet heads were installed above a conveyor capable of transporting a recording medium, and a pump and an ink tank were prepared for each Samba G3L. Note that the Samba G3L has a design resolution of 1200 dpi and is provided with an ink supply port, nozzles, an ink communication path, and an ink discharge port. Next, three tubes were prepared for each Samba G3L and used to respectively connect the ink supply port of the Samba G3L in question and the pump, the pump and the ink tank, and the ink tank and the ink discharge port of the Samba G3L.

Then, each of the above produced chromatic process color ink sets 1 to 56 was filled in the tank, and the pump was operated to fill the inkjet head and the inside of the flow path with ink, after which a nozzle check pattern was printed. After confirming that there were no nozzle misfires, the printing device was placed in standby in an environment of 25°C with the pump having been operated. The nozzle check pattern was then printed again and the number of nozzle misfires was counted to thereby evaluate discharge stability. The evaluation criteria were as follows, with evaluations of 2 to 4 being deemed practically usable levels. Note that the evaluation results shown in Table 4 are for the color with the worst evaluation result among the three color inks evaluated.
4: Even after standby for 3 hours, absolutely no nozzle misfires occurred
3: Absolutely no nozzle misfires occurred even after standby for 2 hours, but one or more nozzle misfires occurred after standby for 3 hours
2: Absolutely no nozzle misfires occurred even after standby for 1 hour, but one or more nozzle misfires occurred after standby for 2 hours
1: One or more nozzle misfires occurred after standby for 1 hour

### <Evaluation 2: Evaluation of Image Quality (Bleeding)>

The inkjet printing device used in Evaluation 1 was filled with each of the above produced chromatic process color ink sets 1 to 56, from the upstream side in the order of cyan, magenta, and yellow. The pump was operated to fill the inkjet head and the inside of the flow path with ink, after which an image (solid patch image) was printed on OK Topcoat+ (coated paper, basis weight 104.7 g/m²) manufactured by Oji Paper Co., Ltd. The image included single-color solid patches (print ratio 100%) having a size of 5 cm × 5 cm, adjacent in the order of cyan, magenta, yellow, and cyan.

Within 10 seconds after printing, the printed material was placed in a 70°C air oven and dried for 1 minute. The printed material was then removed from the oven and the image quality (bleeding) was evaluated by checking the degree of bleeding at the boundaries between the patches with a magnifying glass and with the naked eye. The evaluation criteria were as follows, with evaluations of 2 to 4 being deemed practically usable levels. Note that the evaluation results shown in Table 4 are for the location with the worst evaluation result.
4: Bleeding was not observed at the boundaries when viewed with a magnifying glass and the naked eye
3: Slight bleeding was observed at the boundaries when viewed with a magnifying glass, but it was not possible to determine whether or not there was bleeding at the boundaries with the naked eye
2: Bleeding was observed at the boundaries even with the naked eye but the level thereof was slight
1: Clear bleeding at the boundaries was observed with the naked eye

### <Evaluation 3: Evaluation of Image Quality (Beading: Coated Paper)>

The inkjet printing device used in Evaluation 1 was filled with each of the above produced chromatic process color ink sets 1 to 56, from the upstream side in the order of cyan, magenta, and yellow. The pump was operated to fill the inkjet head and the inside of the flow path with ink, after which an image (gradation patch image) was printed on OK Topcoat+ (coated paper, basis weight 104.7 g/m²) manufactured by Oji Paper Co., Ltd. The image included three-color patches spaced apart side-by-side in which the total print ratio (the sum of the print ratios of each color) was varied in each patch by 30% between 30 and 240%. Note that the print ratios of cyan ink, magenta ink, and yellow ink in each patch were the same. For example, a patch with a total print ratio of 240% is an image that had a cyan ink print ratio of 80%, a magenta ink print ratio of 80%, and a yellow ink print ratio of 80%.

Within 10 seconds after printing, the printed material was placed in a 70°C air oven and dried for 1 minute. Thereafter, the printed material was taken out of the oven, and whether or not there were density irregularities was visually observed to thereby evaluate beading with respect to coated paper. The evaluation criteria were as follows, with evaluations of 2 to 4 being deemed practically usable levels.
4: Density irregularities were not observed at any of the total print ratios
3: Density irregularities were not observed at a total print ratio of 210% or less
2: Density irregularities were not observed at a total print ratio of 180% or less
1: Density irregularities were clearly observed at a total print ratio of 180%

### <Evaluation 4: Evaluation of Rub Fastness>

The inkjet printing device used in Evaluation 1 was filled with each of the above produced chromatic process color ink sets 1 to 56. The pump was operated to fill the inkjet head and the inside of the flow path with ink, after which a solid patch image was printed on OK Topcoat+ (coated paper, basis weight 104.7 g/m²) manufactured by Oji Paper Co., Ltd., and the printed material was placed in a 70°C air oven within 10 seconds. The printed material was taken out of the oven after drying for 1 minute, and for each color, was rubbed a predetermined number of times with a white cotton fabric for testing (unbleached muslin No. 3) while applying a load of 200 g. The rub fastness was then evaluated by visually observing the printed material after rubbing. The evaluation criteria were as follows, with evaluations of 2 to 4 being deemed practically usable levels. Note that the evaluation results shown in Table 4 are for the color with the worst evaluation result.
4: Damage to the printed surface and peeling of ink were not observed even after rubbing 20 times
3: Damage to the printed surface and peeling of ink were not observed even after rubbing 10 times, but damage to the printed surface and peeling of ink were observed when rubbing was performed 20 times
2: Damage to the printed surface and peeling of ink were not observed even after rubbing 5 times, but damage to the printed surface and peeling of ink were observed when rubbing was performed 10 times
1: Damage to the printed surface and peeling of ink were observed when rubbing was performed 5 times

### <Evaluation 5: Evaluation of Image Quality (Feathering)>

The inkjet printing device used in Evaluation 1 was filled with each of the above produced chromatic process color ink sets 1 to 56. The pump was operated to fill the inkjet head and the inside of the flow path with ink, after which an image (fine line image) was printed on OK Prince (high-quality paper) manufactured by Oji Paper Co., Ltd. The image included single-color fine lines having a length of 5 cm spaced apart side-by-side. Note that, in advance, the fine line image was printed on OK Topcoat+ (coated paper, basis weight 104.7 g/m²) manufactured by Oji Paper Co., Ltd., and the image data and head driving conditions were adjusted so that the width of the single-color fine lines was 100 µm.

Within 10 seconds after printing, the printed material was placed in a 70°C air oven and dried for 1 minute. Thereafter, the printed material was taken out of the oven, and whether or not there was any bleeding of the fine lines was visually observed to thereby evaluate feathering. The evaluation criteria were as follows, with evaluations of 2 to 4 being deemed practically usable levels. Note that the evaluation results shown in Table 4 are for the color with the worst evaluation result.
4: The fine lines did not thicken due to bleeding, and ink bleeding along the paper fibers was not found
3: The fine lines did not thicken due to bleeding, but ink bleeding along the paper fibers was observed in less than 10 locations
2: The fine lines thickened slightly due to bleeding, and ink bleeding along the paper fibers was observed in 10 or more and less than 20 locations
1: The fine lines thickened substantially due to bleeding, and ink bleeding along the paper fibers was observed in 20 or more locations

### <Evaluation 6: Evaluation of Bleed-Through>

The inkjet printing device used in Evaluation 1 was filled with each of the above produced chromatic process color ink sets 1 to 56. The pump was operated to fill the inkjet head and the inside of the flow path with ink, after which a solid image (print ratio 100%) was printed on NPi Form 55 (high-quality paper) manufactured by Nippon Paper Industries Co., Ltd. for each single color, and the printed material was placed in a 70°C air oven within 10 seconds. The printed material was taken out of the oven after drying for 1 minute, and the optical density (OD value) on the rear surface of the solid image was measured to thereby evaluate bleed-through. Note that a spectral densitometer (eXact manufactured by X-Rite Inc.) was used, the light source was D50, the viewing angle was 2°, the density status was ISO Status T, and the density white reference was an absolute value. Furthermore, the evaluation criteria were as follows, with evaluations of 2 to 5 being deemed practically usable levels. The evaluation results shown in Table 4 are for the color with the worst evaluation result.
5: OD value of less than 0.14
4: OD value of 0.14 or higher and less than 0.17
3: OD value of 0.17 or higher and less than 0.20
2: OD value of 0.20 or higher and less than 0.23
1: OD value of 0.23 or higher

As a result of the evaluation, with regard to a chromatic process color inkjet ink that contains water, a pigment, an organic solvent, a binder resin, and a wax, contains two or more organic solvents having a boiling point of 190°C or lower, and has an S/R value of 3.0 or less when S is taken as the amount of an organic solvent having a boiling point at 1 atmosphere of 150°C or higher relative to the total amount of ink and R is taken as the amount contained of the binder resin relative to the total amount of ink, it was confirmed that the chromatic process color inkjet ink has excellent discharge stability and practically usable quality in terms of all of beading, bleeding, and rub fastness with respect to coated paper and also feathering and bleed-through when using high-quality paper.

### [Examples 52 to 62]

In addition, Evaluations 7 to 9 shown below were carried out for the above produced chromatic process color ink sets 41 to 51 to confirm the wet spreading, beading, and blocking resistance with respect to a non-permeable recording medium. The evaluation results were as shoen in Table 6.

**Table 6**

| | | | Example 52 | Example 53 | Example 54 | Example 55 | Example 56 | Example 57 | Example 58 | Example 59 | Example 60 | Example 61 | Example 62 |
|---|---|---|---|---|---|---|---|---|---|---|---|---|---|
| Chromatic process color ink set used | | | 41 | 42 | 43 | 44 | 45 | 46 | 47 | 48 | 49 | 50 | 51 |
| Evaluation result | Evaluation 7 | Image quality (beading: film) | 2 | 2 | 3 | 3 | 4 | 4 | 4 | 4 | 4 | 3 | 4 |
| | Evaluation 8 | Image quality (wet spreadability) | 2 | 2 | 3 | 3 | 3 | 4 | 4 | 4 | 4 | 4 | 4 |
| | Evaluation 9 | Blocking resistance | 2 | 2 | 3 | 2 | 4 | 4 | 4 | 4 | 4 | 3 | 4 |

### <Evaluation 7: Evaluation of Image Quality (Beading: Film)>

Beading with respect to film was evaluated by the same method and evaluation criteria as in the aforementioned Evaluation 3, with the exception that FOR #20 (biaxially stretched polypropylene film, thickness 20 µm) manufactured by Futamura Chemical Co., Ltd. was used as a recording medium.

### <Evaluation 8: Evaluation of Image Quality (Wet Spreadability)>

The inkjet printing device used in Evaluation 1 was filled with each of the above produced chromatic process color ink sets 41 to 51, from the upstream side in the order of cyan, magenta, and yellow. The pump was operated to fill the inkjet head and the inside of the flow path with ink, after which a solid image (print ratio 100%) was printed on FOR #20 (biaxially stretched polypropylene film, thickness 20 µm) manufactured by Futamura Chemical Co., Ltd. for each single color, and the printed materials were placed in a 70°C air oven within 10 seconds. The printed materials were taken out of the oven after drying for 1 minute, and the degree to which void hickeys were present was checked with a magnifying glass and with the naked eye to thereby evaluate wet spreadability. The evaluation criteria were as follows, with evaluations of 2 to 4 being deemed practically usable levels. Note that the evaluation results shown in Table 6 are for the color with the worst evaluation result.
4: Void hickeys were not observed when viewed with a magnifying glass and the naked eye
3: Slight void hickeys were observed with a magnifying glass, but it was not possible to determine whether or not there were void hickeys with the naked eye
2: Void hickeys were observed even with the naked eye but the level thereof was slight
1: Clear void hickeys were observed with the naked eye

### <Evaluation 9: Evaluation of Blocking Resistance>

The inkjet printing device used in Evaluation 1 was filled with each of the above produced chromatic process color ink sets 41 to 51, from the upstream side in the order of cyan, magenta, and yellow. The pump was operated to fill the inkjet head and the inside of the flow path with ink, after which a solid patch image was printed on FE2001 (PET film, thickness 12 µm) manufactured by Futamura Chemical Co., Ltd., and the printed material was placed in a 70°C air oven within 10 seconds. The printed material was taken out of the oven after drying for 2 minutes and was cut into a 4 cm × 4 cm square piece for each single color. Note that for the cyan color, only one of two solid patches present on the printed material was used.

Next, the printed surface of the cut solid patch and the rear surface (non-printed surface) of the above-mentioned FE2001 manufactured by Futamura Chemical Co., Ltd. were superposed to form a test piece, which was set in a permanent strain tester. The environmental conditions were a load of 10 kg/cm², a temperature of 40°C, and 80% RH, and the test piece was left to stand for 24 hours. After the test piece was removed from the permanent strain tester, the superposed PET film was instantaneously peeled off while maintaining a 90 degree angle, and the printed surface after peeling was checked with the naked eye to thereby evaluate blocking resistance. The evaluation criteria were as follows, with evaluations of 2 to 4 being deemed practically usable levels. Note that the evaluation results shown in Table 6 are for the color with the worst evaluation result.
4: The printed surface was not removed at all
3: 10% or less of the total area of the printed surface was removed
2: More than 10% and 30% or less of the total area of the printed surface was removed
1: More than 30% of the total area of the printed surface was removed

The disclosure of the present application is related to the subject matter described in Japanese Patent Application No. 2020-201541 filed on December 4, 2020.

## Claims

1. A chromatic process color inkjet ink comprising water, a pigment, an organic solvent, a binder resin, and a wax, wherein
the organic solvent contains an organic solvent having a boiling point at 1 atmosphere of 190°C or lower, and
when an amount of an organic solvent having a boiling point at 1 atmosphere of 150°C or higher relative to a total amount of ink is S, and an amount contained of the binder resin relative to the total amount of ink is R, a value of S/R is 3.0 or less,
**characterized in that**
the organic solvent having a boiling point at 1 atmosphere of 190°C or lower contains a dihydric alcohol-based solvent and a glycol monoalkyl ether solvent.

2. The chromatic process color inkjet ink according to claim 1, wherein the organic solvent having a boiling point at 1 atmosphere of 190°C or lower contains two or more organic solvents, and among the two or more organic solvents, there is a difference of 10 to 100°C between a boiling point of an organic solvent having a highest boiling point and a boiling point of an organic solvent having a lowest boiling point.

3. The chromatic process color inkjet ink according to claim 1 or 2, wherein the chromatic process color inkjet ink is for a printing device that has an ink circulation mechanism configured to communicate with an inkjet head.

4. The chromatic process color inkjet ink according to any of claims 1 to 3, wherein the wax contains a polyolefin-based wax having a melting point of 80 to 180°C.

5. The chromatic process color inkjet ink according to any of claims 1 to 4, wherein an amount of an organic solvent having a boiling point at 1 atmosphere of over 190°C relative to the total amount of ink is 1% by mass or less, and the value of S/R is 2.3 or more and 3.0 or less.

## Patentansprüche

1. Farbtintenstrahltinte für chromatisches Verfahren, umfassend Wasser, ein Pigment, ein organisches Lösungsmittel, ein Bindemittelharz und ein Wachs, wobei
das organische Lösungsmittel ein organisches Lösungsmittel mit einem Siedepunkt bei 1 Atmosphäre von 190 °C oder niedriger enthält, und
wenn eine Menge eines organischen Lösungsmittels mit einem Siedepunkt bei 1 Atmosphäre von 150 °C oder höher relativ zu einer Gesamtmenge der Tinte S ist und eine enthaltene Menge des Bindemittelharzes relativ zu der Gesamtmenge der Tinte R ist, ein Wert von S/R 3,0 oder weniger beträgt,
**dadurch gekennzeichnet, dass**
das organische Lösungsmittel mit einem Siedepunkt bei 1 Atmosphäre von 190 °C oder niedriger ein Lösungsmittel auf Basis von zweiwertigem Alkohol und ein Glykolmonoalkylether-Lösungsmittel enthält.

2. Farbtintenstrahltinte für chromatisches Verfahren nach Anspruch 1, wobei das organische Lösungsmittel mit einem Siedepunkt bei 1 Atmosphäre von 190 °C oder niedriger zwei oder mehr organische Lösungsmittel enthält und unter den zwei oder mehr organischen Lösungsmitteln eine Differenz von 10 bis 100 °C zwischen einem Siedepunkt eines organischen Lösungsmittels mit einem höchsten Siedepunkt und einem Siedepunkt eines organischen Lösungsmittels mit einem niedrigsten Siedepunkt besteht.

3. Farbtintenstrahltinte für chromatisches Verfahren nach Anspruch 1 oder 2, wobei die Farbtintenstrahltinte für chromatisches Verfahren für eine Druckvorrichtung ist, die einen Tintenzirkulationsmechanismus aufweist, der dazu eingerichtet ist, mit einem Tintenstrahlkopf zu kommunizieren.

4. Farbtintenstrahltinte für chromatisches Verfahren nach einem der Ansprüche 1 bis 3, wobei das Wachs ein Wachs auf Polyolefinbasis mit einem Schmelzpunkt von 80 bis 180 °C enthält.

5. Farbtintenstrahltinte für chromatisches Verfahren nach einem der Ansprüche 1 bis 4, wobei eine Menge eines organischen Lösungsmittels mit einem Siedepunkt bei 1 Atmosphäre von über 190 °C relativ zu der Gesamtmenge der Tinte 1 Massen-% oder weniger beträgt und der Wert von S/R 2,3 oder mehr und 3,0 oder weniger beträgt.

## Revendications

1. Encre pour jet d'encre couleur de processus chromatique comprenant de l'eau, un pigment, un solvant organique, une résine liante, et une cire, dans laquelle
le solvant organique contient un solvant organique ayant un point d'ébullition à 1 atmosphère de 190 °C ou moins, et
lorsqu'une quantité d'un solvant organique ayant un point d'ébullition à 1 atmosphère de 150 °C ou plus relativement à une quantité totale d'encre est S, et une quantité contenue de la résine liante relativement à la quantité totale d'encre est R, une valeur de S/R est de 3,0 ou moins,
**caractérisée en ce que**
le solvant organique ayant un point d'ébullition à 1 atmosphère de 190 °C ou moins contient un solvent à base d'alcool dihydrique et un solvent à éther de glycol-monoalkyle.

2. Encre pour jet d'encre couleur de processus chromatique selon la revendication 1, dans laquelle le solvant organique ayant un point d'ébullition à 1 atmosphère de 190 °C ou moins contient deux ou plus de deux solvants organiques, et parmi les deux ou plus de deux solvants organiques, il y a une différence de 10 à 100 °C entre un point d'ébullition d'un solvant organique ayant un point d'ébullition le plus élevé et un point d'ébullition d'un solvant organique ayant un point d'ébullition le plus bas.

3. Encre pour jet d'encre couleur de processus chromatique selon la revendication 1 ou 2, dans laquelle l'encre pour jet d'encre couleur de processus chromatique est pour un dispositif d'impression qui a un mécanisme de circulation d'encre configuré pour communiquer avec une tête à jet d'encre.

4. Encre pour jet d'encre couleur de processus chromatique selon de quelconques des revendications 1 à 3, dans laquelle la cire contient une cire à base de polyoléfine ayant un point de fusion de 80 à 180 °C.

5. Encre pour jet d'encre couleur de processus chromatique selon de quelconques des revendications 1 à 4, dans laquelle une quantité d'un solvant organique ayant un point d'ébullition à 1 atmosphère de plus de 190 °C relativement à la quantité totale d'encre est de 1 % en masse ou moins, et la valeur de S/R est de 2,3 ou plus et de 3,0 ou moins.
